(19) Europäisches Patentamt
European Patent Office
Office européen des brevets

(11) **EP 4 654 668 A1**

(12) **EUROPEAN PATENT APPLICATION**
published in accordance with Art. 153(4) EPC

(43) Date of publication:
**26.11.2025 Bulletin 2025/48**

(21) Application number: **23916837.0**

(22) Date of filing: **20.01.2023**

(51) International Patent Classification (IPC):
**H04W 36/30** (2009.01)

(52) Cooperative Patent Classification (CPC):
**H04W 36/30**

(86) International application number:
**PCT/CN2023/073379**

(87) International publication number:
**WO 2024/152359 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Jinyu**
  **Dongguan, Guangdong 523860 (CN)**
• **XU, Weijie**
  **Dongguan, Guangdong 523860 (CN)**
• **CUI, Shengjiang**
  **Dongguan, Guangdong 523860 (CN)**

(74) Representative: **Mewburn Ellis LLP
Aurora Building
Counterslip
Bristol BS1 6BX (GB)**

(54) **METHOD AND DEVICE FOR WIRELESS COMMUNICATION**

(57) Embodiments of the present application provide a method and a device for wireless communication, which can realize more flexible mobility management and are suitable for zero-power devices, ambient power-enabled devices, or devices having a wake up receiver, The method for wireless communication comprises: performing, by a first communication device, mobility management according to first information, wherein, the first communication device is a zero-power device or an ambient power-enabled device, or the first communication device is a device having a wake up receiver, the mobility management comprises at least one of the following: service device selection, service device reselection, and service device switching; wherein, the first information is at least one of the following: a reference signal measurement result of a service device and/or a candidate device, a decoding result of a target message, a decoding result of a target channel, and energy harvesting information of the first communication device (S210).

<u>**200**</u>

A first communication device performs mobility management based on first information,
where the first communication device is a zero power device or an ambient power-enabled device, or the first communication device is a device with a wake up receiver; the mobility management includes at least one of: service device selection, service device reselection, or service device handover;
where the first information is at least one of: a reference signal measurement result of a service device and/or a reference signal measurement result of a candidate device, a decoding result of a target message, a decoding result of a target channel, or power harvesting information of the first communication device.

S210

**FIG. 5**

EP 4 654 668 A1

**Description**

## TECHNICAL FIELD

The embodiments of the present disclosure relate to the field of communications, and in particular, to a method for wireless communication and a device.

## BACKGROUND

Based on the battery-free, maintenance-free and low-cost characteristics of a zero power device, the zero power device is highly suitable for large-scale deployment and some special demand scenarios, such as goods in logistics, animals in livestock farms, and key components in high temperature and high pressure environments. However, for some mobile zero power devices, how to achieve mobility management is a problem that needs to be solved.

## SUMMARY

Embodiments of the present disclosure provide a method for wireless communication and a device, in which a first communication device can perform mobility management based on first information, where the first information includes at least one of: a reference signal measurement result of a serving device and/or a reference signal measurement result of a candidate device, a decoding result of a target message, a decoding result of a target channel, or power harvesting information of the first communication device. In this way, more flexible mobility management can be implemented, and it is suitable for a zero power device or an ambient device or a device with a wake up receiver.
In a first aspect, a method for wireless communication is provided, and the method includes:

performing, by a first communication device, mobility management based on first information,
where the first communication device is a zero power device or an ambient device, or the first communication device is a device with a wake up receiver; the mobility management includes at least one of: serving device selection, serving device reselection, or serving device handover,
where the first information is at least one of: a reference signal measurement result of a serving device and/or a reference signal measurement result of a candidate device, a decoding result of a target message, a decoding result of a target channel, or power harvesting information of the first communication device.

In a second aspect, a communication device is provided, which is configured to perform the method in the first aspect.
Specifically, the communication device includes a functional module configured to perform the method in the first aspect.
In a third aspect, a communication device is provided, which includes a processor and a memory. The memory is configured to store a computer program, and the processor is configured to call and run the computer program stored in the memory, to enable the communication device to perform the method in the first aspect.
In a fourth aspect, an apparatus is provided, which is configured to perform the method in the first aspect.
Specifically, the apparatus includes: a processor, configured to call and run a computer program from a memory, to enable a device equipped with the apparatus to perform the method in the first aspect.
In a fifth aspect, a computer-readable storage medium is provided, which is configured to store a computer program that enables a computer to perform the method in the first aspect.
In a sixth aspect, a computer program product is provided, which includes computer program instructions that enables a computer to perform the method in the first aspect.
In a seventh aspect, there is provided a computer program that, when being executed on a computer, enables the computer to perform the method in the first aspect.
Based on the above technical solutions, the first communication device can perform mobility management based on first information, where the first information includes at least one of: a reference signal measurement result of a serving device and/or a reference signal measurement result of a candidate device, a decoding result of a target message, a decoding result of a target channel, or power harvesting information of the first communication device. In this way, more flexible mobility management can be implemented, and it is suitable for a zero power device or an ambient device or a device with a wake up receiver.

## BRIEF DESCRIPTION OF THE DRAWINGS

FIG. 1 is a schematic diagram of a communication system architecture applied in the embodiments of the present disclosure.

FIG. 2 is a schematic diagram of a zero power communication system provided in the present disclosure.

FIG. 3 is a schematic diagram of a back scattering communication principle provided in the present disclosure.

FIG. 4 is a schematic circuit diagram of a resistive load modulation provided in the present disclosure.

FIG. 5 is a schematic flowchart of a method for wireless communication provided according to the embodiments of the present disclosure.

FIG. 6 is a schematic diagram of an OOK reference signal provided according to the embodiments of the present disclosure.

FIG. 7 is a schematic diagram of a first evaluation window provided according to the embodiments of the present disclosure.

FIG. 8 is a schematic diagram of charging a first communication device according to the embodiments of the present disclosure.

FIG. 9 is a schematic block diagram of a communication device provided according to the embodiments of the present disclosure.

FIG. 10 is a schematic block diagram of a communication device provided according to the embodiments of the present disclosure.

FIG. 11 is a schematic block diagram of an apparatus according to the embodiments of the present disclosure.

FIG. 12 is a schematic block diagram of a communication system provided according to the embodiments of the present disclosure.

## DETAILED DESCRIPTION

Technical solutions in the embodiments of the present disclosure will be described below with reference to the drawings in the embodiments of the present disclosure. It is apparent that, the described embodiments are only part of the embodiments of the present disclosure, rather than all of the embodiments. With respect to the embodiments in the present disclosure, all other embodiments obtained by those ordinary skilled in the art without making any creative work shall fall within the scope of protection of the present disclosure.

The technical solutions of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial commicnation networks (NTN) system, a universal mobile telecommunication system (UMTS), wireless local area networks (WLAN), internet of things (IoT), wireless fidelity (WiFi), a 5th-generation (5G) communicationsystem, a 6th-generation (6G) communication system, or other communication systems.

Generally speaking, conventional communication systems support a limited number of connections and are easy to be implemented. However, with the development of communication technology, mobile communication systems will not only support conventional communications, but will also support, for example, device to device (D2D) communication, machine to machine (M2M) communication, machine type communication (MTC), vehicle to vehicle (V2V) communication, sidelink (SL) communication, vehicle to everything (V2X) communication, or the like. The embodiments of the present disclosure may also be applied to these communication systems.

In some embodiments, a communication system in the embodiments of the present disclosure may be applied to a carrier aggregation (CA) scenario, a dual connectivity (DC) scenario, a standalone (SA) networking scenario, or a non-standalone (NSA) networking scenario.

In some embodiments, a communication system in the embodiments of the present disclosure may be applied to an unlicensed spectrum, which may also be considered as a shared spectrum. Alternatively, the communication system in the embodiments of the present disclosure may be applied to a licensed spectrum, which may also be considered as an unshared spectrum.

In some embodiments, a communication system in the embodiments of the present disclosure may be applied to an FR1 band (corresponding to a frequency band range of 410 MHz to 7.125 GHz), and may also be applied to the FR2 band (corresponding to a frequency band range of 24.25 GHz to 52.6 GHz), and may further also be applied to new bands, such as high-frequency frequency band corresponding to a frequency band range of 52.6 GHz to 71 GHz or corresponding to a frequency band range of 71 GHz to 114.25 GHz.

In the embodiments of the present disclosure, various embodiments are described in conjunction with a network device and a terminal device. Here, the terminal device may also be referred to as user equipment (UE), an access terminal, a user unit, a user station, a mobile station, a mobile platform, a remote station, a remote terminal, a mobile device, a user terminal, a terminal, a wireless communication device, a user agent or user device, or the like.

The terminal device may be a station (STATION, STA) in a WLAN, which may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, an in-vehicle device, a wearable device, a terminal device in a next generation communication system (such as an NR network), a terminal device in a future evolved public land mobile network (PLMN) network, or the like.

In the embodiments of the present disclosure, the terminal device may be deployed on land, including indoor or outdoor, handheld, wearable or in-vehicle; the terminal device may also be deployed on water (such as on a steamship, etc.); the terminal device may also be deployed in the air (such as on an airplane, on a balloon and on a satellite, etc.).

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, an in-vehicle communication device, a wireless communication chip/application specific integrated circuit (ASIC)/system on chip (SoC), or the like.

As an example rather than a limitation, in the embodiments of the present disclosure, the terminal device may be a wearable device. The wearable device may also be referred to as a wearable smart device, which is a general term for wearable devices developed by performing the intellectualized design on daily wear by applying wearable technology, such as glasses, gloves, watches, clothing and shoes, etc. The wearable device is a portable device that is worn directly on a body or integrated into the user's clothes or accessories. The wearable device not only is a hardware device, but also implements powerful functions through software support, data interaction, and cloud interaction. Generalized wearable smart devices include devices that are fully functional, large in size, and may implement complete or partial functions without relying on smartphones, such as smart watches or smart glasses, as well as devices that only focus on a certain type of application function and need to be used in conjunction with other devices (such as smartphones), such as various smart bracelets and smart jewelry for monitoring vital signs, or the like.

In the embodiments of the present disclosure, the network device may be a device for communicating with a mobile device. The network device may be an access point (AP) in the WLAN, a base station (Base Transceiver Station, BTS) in the GSM or CDMA, a base station (NodeB, NB) in the WCDMA, an evolution base station (Evolution NodeB, eNB or eNodeB) in the LTE, a relay station or access point, an in-vehicle device, a wearable device, a network device or a base station (gNB) or a transmission reception point (TRP) in the NR network, a network device in the future evolved PLMN network or in the NTN network, or the like.

As an example rather than a limitation, in the embodiments of the present disclosure, the network device may have mobile characteristics. For example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments, the network device may be a base station installed on land, water, or the like.

In the embodiments of the present disclosure, the network device may provide a service for a cell, and the terminal device may communicate with the network device through a transmission resource (e.g., a frequency domain resource, or in other words, a spectrum resource) used by the cell. The cell may be a cell corresponding to the network device (e.g., a base station). The cell may belong to a macro base station or a base station corresponding to a small cell. The small cells here may include: a metro cell, a micro cell, a pico cell, a femto cell, or the like. These small cells have characteristics of small coverage ranges and low transmission power, which are suitable for providing high-speed data transmission services.

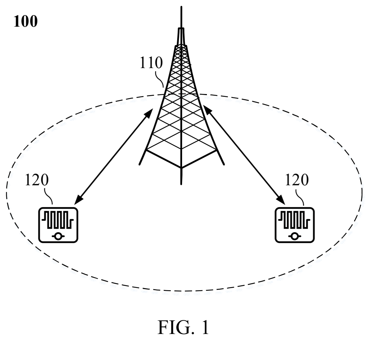

Exemplarily, a communication system 100 applied by the embodiments of the present disclosure is illustrated in FIG. 1. The communication system 100 may include a network device 110, and the network device 110 may be a device for communicating with terminal devices 120 (or referred to as communication terminals or terminals). The network device 110 may provide communication coverage for a specific geographical area and may communicate with terminal devices located within the coverage area.

FIG. 1 exemplarily shows one network device and two terminal devices. In some embodiments, the communication system 100 may include a plurality of network devices, each of which may have a coverage area in which another number of terminal devices may be included, which is not limited in the embodiments of the present disclosure.

In some embodiments, the communication system 100 may further include other network entities such as a network controller and a mobility management entity, which is not limited in the embodiments of the present disclosure.

It should be understood that, in the embodiments of the present disclosure, a device having a communication function in the network/system may be referred to as a communication device. Taking the communication system 100 illustrated in FIG. 1 as an example, the communication equipment may include a network device 110 and a terminal device 120 with a communication function. The network device 110 and the terminal device 120 may be the specific devices described above, which will not be repeated here. The communication device may further include other devices in the communication system 100, such as a network controller, a mobile management entity and other network entities, which are not limited in the embodiments of the present disclosure.

It should be understood that the terms "system" and "network" are often used interchangeably herein. The term "and/or" herein is only an association to describe associated objects, which indicates that there may be three kinds of relationships. For example, "A and/or B" may indicate three cases where: A exists alone, both A and B exist, and B exists alone. In addition, the character "/" herein generally indicates that the associated objects before and after the character "/" are in an "or" relationship.

It should be understood that a first communication device, a serving device and a candidate device are involved in the present disclosure. The first communication device may be a terminal device, such as a mobile phone, a machine facility, customer premise equipment (CPE), industrial device, a vehicle, or the like. The serving device and/or the candidate device may be a counterpart communication device of the first communication device, such as a network device, a mobile phone, an industrial device, a vehicle, or the like.

The terms used in the detailed description of the present disclosure are only for the purpose of explaining specific embodiments of the present disclosure, but are not intended to limit the present disclosure. The terms "first," "second," "third," "fourth", etc., in the specification, claims and drawings of the present disclosure are used to distinguish different objects, rather than to describe a specific order. In addition, the terms "comprise/include", and "have" and any variations thereof, are intended to cover non-exclusive inclusions.

It should be understood that the "indicate" mentioned in the embodiments of the present disclosure may mean a direct indication, an indirect indication, or may mean that therer is an indication relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond" may mean that there is a direct correspondence or indirect correspondence between the two, or may mean that there is an association between the two, or may mean a relationship of indicating and being indicated, or a relationship of configuring and being configured, or the like.

In the embodiments of the present disclosure, "predefined" or "pre-configured" may be implemented by pre-saving corresponding codes, tables or other manners that may be used to indicate related information, in the device (e.g., including the terminal device and the network device), and the specific implementation thereof is not limited in the present disclosure. For example, "predefined" may indicate being defined in a protocol.

In the embodiments of the present disclosure, the term "protocol" may refer to a standard protocol in the communication field, for example, the "protocol" may be an evolution of the existing LTE protocol, NR protocol, Wi-Fi protocol, or a protocol related to other relevant communication systems. The type of the protocol is not limited in the present disclosure.

In order to better understand the embodiments of the present disclosure, the communication based on zero power devices related to the present disclosure is described.

In recent years, the application of zero power devices has become increasingly widespread. A typical zero power device is a radio frequency identification (RFID), which is a technology that achieves contactless automatic transmission and identification of tag information by modes of radio coupling between the transceiver and transmitter. This includes short-range inductive coupling and long-range electromagnetic coupling. An RFID tag is also referred to as a "radio frequency tag" or an "electronic tag". According to the different power supply modes, types of electronic tags may be divided into an active electronic tag, a passive electronic tag and a semi-passive electronic tag. The active electronic tag, also referred to as an initiative electronic tag, which means that a built-in battery of the electronic tag provides power for operation. Unlike the activation method of passive radio frequency, the tag may actively transmit information in the set frequency band. The passive electronic tag, also referred to as an inactive electronic tag, does not support a built-in battery. When the passive electronic tag approaches a reader/writer, the antenna of the electronic tag in the near field formed by the radiation of antennas of the reader/writer generates an induced current via electromagnetic induction, and the induced current drives a chip circuit of the electronic tag. The chip circuit transmits identity information stored in the tag to the reader/writer via the antenna(s) of the electronic tag. The semi-initiative electronic tag inherits advantages of the passive electronic tag which include small size, light weight, low price and long service life. When there is no reader/writer accessing, a built-in battery only provides power for a small number of circuits in a chip. Only when there is the reader/writer accessing, the built-in battery supplies power to the RFID chip, to increase a reading/writing distance of the tag and improve reliability of communication.

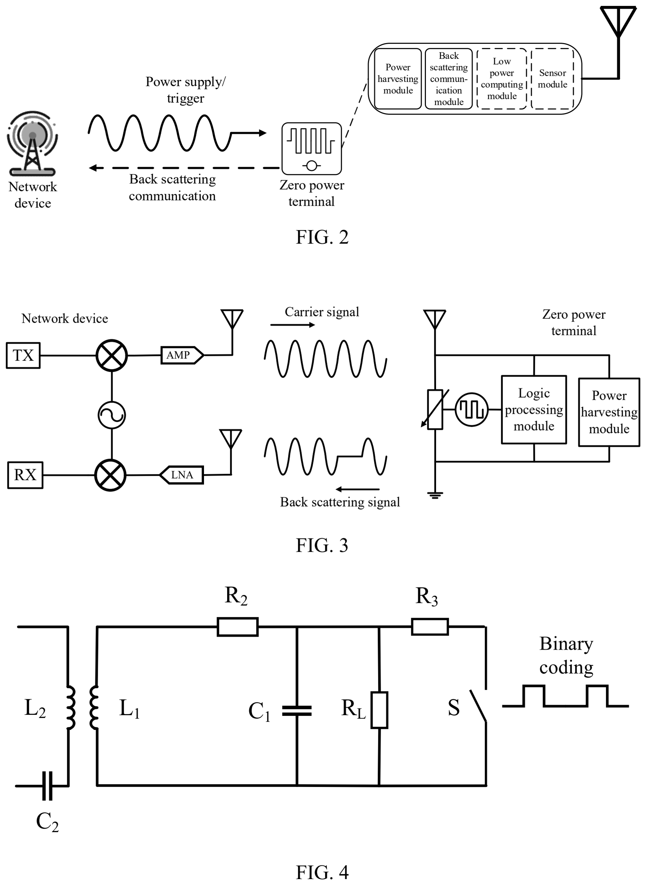

As a wireless communication technology, the most basic RFID system is composed of two parts: an electronic tag (TAG) and a reader/writer. The electronic tag includes a coupling component and a chip. Each electronic tag has a unique electronic code and is placed on a target to be measured to achieve a purpose of marking a target object. The reader/writer can not only read information on the electronic tag, but also write information on the electronic tag, and provide the electronic tag with the power required for communication. As illustrated in FIG. 2, after the electronic tag enters the electromagnetic field, the electronic tag receives a radio frequency signal transmitted from the reader/writer. The passive electronic tag or the inactive electronic tag uses the power obtained from the electromagnetic field generated in space, to transmit information stored in the electronic tag. The reader/writer reads the information and decodes the information to identify the electronic tag.

The RFID is a type of zero power communication. This type of zero power communication key technologies includes power harvesting and back scattering communication as well as low power computing. As illustrated in FIG. 2, a typical zero power communication system includes a reader/writer and a zero power terminal. The reader/writer transmits a radio wave to supply power to the zero power terminal. A power harvesting module installed in the zero power terminal may harvest the power carried by radio wave in space (a radio wave emitted by the reader/writer is illustrated in FIG. 2), to drive a low power computing module of the zero power terminal and implement back scattering communication. After obtaining the power, the zero power terminal may receive control signaling from the reader/writer and transmit data to the reader/writer by means of back scattering based on the control signaling. The transmitted data may come from data stored in the zero power terminal itself (such as an identity or pre-written information, a production date, a brand, a manufacturer of a product, etc.). The zero power terminal may also be loaded with various sensors, so as to report the data harvested by various sensors based on a zero power mechanism.

Zero power communication uses power harvesting and back scattering communication technology. A zero power communication network is composed of a network device and a zero power terminal. As illustrated in FIG. 2, the network device is configured to transmit a wireless power supply signal and a downlink communication signal to the zero power terminal and to receive backscattered signals from the zero power terminal. A basic zero power terminal includes a power harvesting module, a back scattering communication module, and a low power computing module. In addition, the zero power terminal may further have a memory or sensor for storing some basic information (such as article identification, etc.) or obtaining sensor data such as ambient temperature and ambient humidity.

One of the key technologies of zero power communication system is back scattering communication. As illustrated in FIG. 3, the zero power device (i.e., a back scattering tag in FIG. 3) receives a carrier signal transmitted from the back scattering reader/writer and harvests power through a radio frequency (RF) power harvesting module. Then a low power processing module (a logic processing module in the FIG. 3) is operated to modulate the incoming signal and to perform back scattering.

Specifically, the main characteristics of the zero power communication system are as follows:

(1) the terminal does not actively transmit a signal, but implements back scattering communication by modulating an incoming signal;
(2) the terminal does not rely on a traditional active power amplifier transmitter, but uses a low power compution unit, which greatly reduces complexity of the hardware; and
(3) combined with power harvesting, battery-free communication may be achieved.

When a zero power device performs back scattering communication, the frequency of the back scattering signal may be consistent with the incoming signal, or a frequency offset may occur. When frequency offset occurs, an offset amount of each device may be the same or different.

When the zero power device performs back scattering communication, the back scattering signal may be triggered immediately upon receiving an incoming signal, or may be performed after a certain time offset. When there is a time offset, the time offset of the reflected signals of each device may be the same or different.

When the zero power device performs back scattering communication, spatial characteristics of the back scattering signal may be set as needed. For example, an antenna array may be configured to achieve a larger antenna gain in a certain direction and a smaller gain in other directions, thereby concentrating a signal power in a certain spatial direction.

When performing back scattering communication, a zero power device may also perform information modulation, which is referred to as load modulation. Load modulation is a mode often used by an electronic tag to transmit data to readers. The load modulation completes the modulation process by adjusting the electrical parameters of the electronic tag oscillation circuit according to the rhythm of the data stream, so as to make the size and phase of impedance of the electronic tag change accordingly. There are two main types of load modulation technology: resistive load modulation and capacitive load modulation.

In resistive load modulation, a load is connected in parallel with a resistor, referred to as a load modulation resistor, which is turned on and off based on a clock of the data stream, and the turn-on and turn-off of a switch S is controlled by binary data encoding. A circuit schematic diagram of the resistive load modulation is illustrated in FIG. 4.

In the capacitive load modulation, the load is connected in parallel with a capacitor, replacing the load modulation resistor controlled by the binary data encoding in FIG. 4.

In order to better understand the embodiments of the present disclosure, an analogue-to-digital conversion (analog to digital converter, ADC) module related to the present disclosure is described.

The ADC module is configured to convert the received analog signal into a digital signal. The accuracy of the ADC is usually described by the number of bits, which determines the size of the value that the ADC may record. For example, 8 bits record precision values of 0 to 255, 10 bits record precision values of 0 to 1023, and so on. It may be seen that every time the number of ADC bits increases by one, the range doubles and the accuracy also doubles.

Limited by the cost and power consumption of the zero power device, a receiver of the zero power device is usually simpler and the resolution of the ADC module is lower, such as 1-bit or N-bit. In this way, such a zero power device may not be able to accurately measure signal strength, such as a reference signal received power (RSRP), which will cause large errors in a measurement result.

However, in a cellular system, the terminal device needs to measure a serving cell and a neighboring cell and determines whether to perform cell reselection or cell handover, so as to ensure that the terminal is always connected to a cell with better signal quality during movement and to ensure the subsequent communication quality.

In order to better understand the embodiments of the present disclosure, the cell selection and reselection rules related to the present disclosure are described.

The cell selection process usually occurs when the terminal is just turned on, needs to scan all radio frequency (RF) channels and selects a suitable cell.

Optionally, a cell selection criterion may include an S criterion.

Specifically, the S criterion is fulfilled when: Srxlev > 0 and Squal > 0,

where

$$Srxlev = Q_{rxlevmeas} - (Q_{rxlevmin} + Q_{rxlevminoffset}) - P_{compensation} - Q_{offsettemp};$$

where

$$Squal = Q_{qualmeas} - (Q_{qualmin} + Q_{qualminoffset}) - Qoffset_{temp},$$

where $Q_{rxlevmeas}$ represents a measured reception level value of a cell, RSRP; $Q_{rxlevmin}$ represents a minimum reception level value of a cell, which may be obtained via system messages, such as system information block 2 (SIB2); $Q_{rxlevminoffset}$ represents an offset value relative to $Q_{rxlevmin}$; $P_{compensation}$ represents a compensation value; and $Q_{offsettemp}$ represents a cell-level offset value.

Optionally, a cell reselection criterion may include an R criterion.

Specifically, the R criterion is a magnitude relationship between a cell ranking $R_s$ of the serving cell and a cell ranking $R_n$ of the neighboring cell, where when $R_s < R_n$, the cell reselection is performed,

where

$$R_s = Q_{meas,s} + Q_{hyst} - Q_{offsettemp},$$

where

$$R_n = Q_{meas,n} - Q_{offset} - Q_{offsettemp},$$

where $Q_{meas,s}$ represents a measured RSRP of the serving cell, $Q_{meas,n}$ represents a measured RSRP of the neighboring cell, $Q_{offsettemp}$ represents a cell-level offset value, $Q_{hyst}$ represents a cell reselection hysteresis value, and $Q_{offset}$ represents a required difference between the measured RSRP of the serving cell and measured RSRP of the neighboring cell.

Specifically, UE measures the RSRP of the serving cell and the neighboring cell, i.e., $Q_{meas}$ in the above Formula, so as to calculate an R. The cells are ranked based on a value of the R. When a range to the best cell (rangeToBestCell) is not configured, the UE reselects to a cell with the highest ranking.

If rangeToBestCell is configured, the user selects a cell with the highest number of beams that meet a threshold as a target cell from all candidate cells whose signal quality difference with the best cell is within a range of rangeToBestCell.

A measurement rule for cell reselection is used by the terminal to determine whether to perform measurement on a neighboring cell. When a signal quality of the serving cell is reletively good (Srxlev > $S_{nonIntraSearchP}$ and Squal > $S_{nonIntraSearchQ}$), the terminal device may choose not to measure intra-frequency neighboring cells and inter-frequency neighboring cells of low priority or equal priority, or inter-radio access technology (RAT) frequencies of low priority or equal priority, and only measure frequencies of high priority; otherwise, the terminal should measure these frequencies.

It should be noted that $S_{nonIntraScarchP}$ is a threshold value, which is used for comparing with Srxlev to determine whether to start non-intra frequency (inter-frequency or inter-RAT) measurement. $S_{nonIntraScarchP}$ is for measurement of the reference signal received power (RSRP).

It should be noted that $S_{nonIntraSearchQ}$ is a threshold value, which is used for comparing with Squal to determine whether to start non-intra frequency (inter-frequency or inter-RAT) measurement. $S_{nonIntraScarchQ}$ is for measurement of the reference signal received quality (RSRQ). $S_{nonIntraScarchQ}$ is an RSRQ threshold for searching non-intra frequencies.

When a condition that Srxlev > $S_{nonIntraSearchP}$ and Squal > $S_{nonIntraScarchQ}$ is fulfiled, only the frequency of high priority is measured; when this condition is not fulfiled, all non-intra frequencies, including non-intra frequencies of high priority, equal priority and low priority, need to be measured.

Inter-frequency neighboring cells of high priority or inter-RAT frequencies of high priority need to be measured all the time, so as to enable the terminal to reselect a frequency with a better priority.

Specifically, a cell reselection criterion is used by the terminal to determine under what circumstances the terminal may reselect another cell. Generally speaking, for frequencies of high priority, as long as a quality of the target cell is better than a certain threshold and maintained for a specified time length, the terminal will reselect the target cell; for the intra-frequency and the equal priority, cell ranking may be used for comparison; and for the low priority, cell reselection will only be performed when a quality of a current serving cell deteriorates and the quality of the target cell is good.

Specifically, a behavior of the cell reselection is based on measurement results of neighboring cells.

To perform cell reselection for an intra-frequency cell and an inter-frequency cell of the equal priority, an R criteria (ranked by the RSRP) must be fulfiled, i.e., a signal quality of a new cell must be better than a signal quality of a current cell and last for a specified time length, and the UE must stay in the original cell for no less than 1 second.

To perform cell reselection for a cell of high priority, the signal quality of the cell of high priority must be higher than a certain threshold and last for a specified time length, and the UE must stay in the original cell for no less than 1 second.

To perform cell reselection for a cell of low priority, there must be no cell of high priority, and no cell of equal priority meeting the requirement, a signal quality of the original cell is lower than a certain threshold, the signal quality of the cell of low priority is higher than a certain threshold and lasts for a certain time length, and the UE stays in the original cell for no less than 1 second.

In order to better understand the embodiments of the present disclosure, information related to the problems solved by the present disclosure is described.

Based on the battery-free, maintenance-free and low-cost characteristics of the zero power device, the zero power device is greatly suitable for large-scale deployment and some special demand scenarios, such as goods in logistics, animals in livestock farms, and key components in high temperature and high pressure environments. In this case, the mobility measurement and management of the user are greatly affected: (1) the power harvesting and storage of the zero power device may be small, therefore the measurement process cannot consume too much power; (2) a receiver module of the zero power device is very simple, similar to a wake up receiver (WUR), which can receive an on-off keying (OOK) signal and perform envelope detection, but cannot accurately measure reference signal received power (RSRP), reference signal received quality (RSRQ), signal to interference plus noise ratio (SINR) or the like results of the signal. In addition, a bit width of the ADC module configured in this type of receiver (such as WUR) is generally small, such as 1-bit or 3-bit, and its quantization accuracy is much lower than the current 12-bit or 14-bit.

Based on the above problems, the present disclosure proposes a solution for mobility management, in which a first communication device can perform mobility management based on first information, where the first information includes at least one of: a reference signal measurement result of a serving device and/or a reference signal measurement result of a candidate device, a decoding result of a target message, a decoding result of a target channel, or power harvesting information of the first communication device. More flexible mobility management can be implemented, and it is suitable for the zero power device or the ambient device or the device with a wake up receiver.

To facilitate understanding of the technical solutions of the embodiments of the present disclosure, the technical solutions of the present disclosure are described in detail below through specific embodiments. The following related technologies may be arbitrarily combined with the technical solutions of the embodiments of the present disclosure as optional solutions, and they all belong to the protection scope of the embodiments of the present disclosure. The embodiments of the present disclosure include at least part of the following contents.

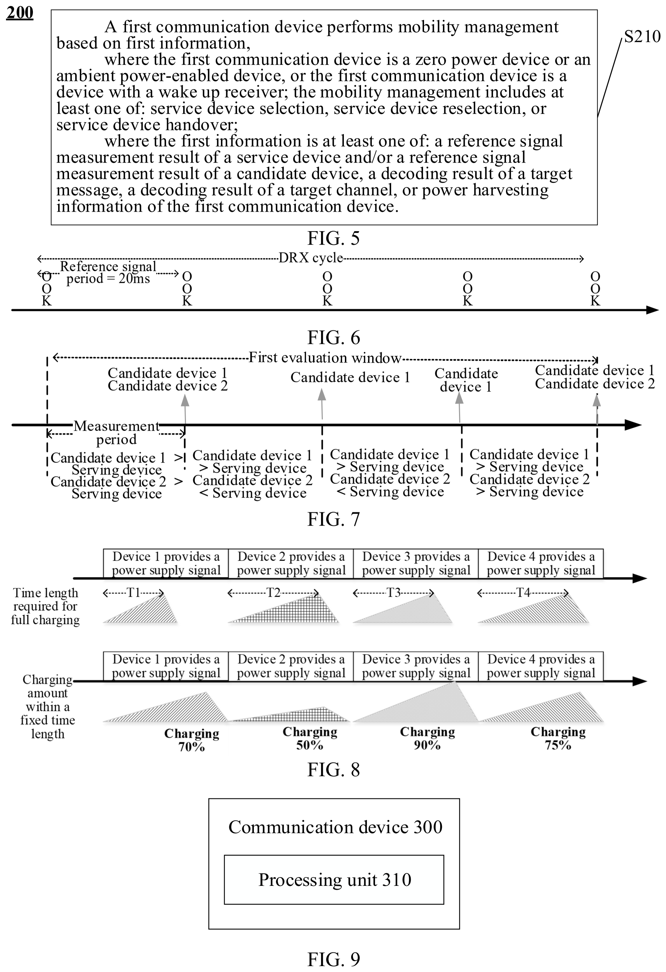

FIG. 5 is a schematic flowchart of a method for wireless communication 200 according to the embodiments of the present disclosure. As illustrated in FIG. 5, the method for wireless communication 200 may include at least part of the following contents:

S210, a first communication device performs mobility management based on first information,
where the first communication device is a zero power device or an ambient device, or the first communication device is a device with a wake up receiver; the mobility management includes at least one of: serving device selection, serving device reselection, or serving device handover,

where the first information is at least one of: a reference signal measurement result of a serving device and/or a reference signal measurement result of a candidate device, a decoding result of a target message, a decoding result of a target channel, or power harvesting information of the first communication device.

In the embodiments of the present disclosure, the first communication device may perform the mobility management based on the reference signal measurement result of the serving device and/or the reference signal measurement result of the candidate device, and/or the first communication device may perform the mobility management based on the decoding result of the target message, and/or the first communication device may perform the mobility management based on the decoding result of the target channel, and/or the first communication device may perform the mobility management based on the power harvesting information of the first communication device. Therefore, more flexible mobility management can be implemented, and it is suitable for mobility management of the zero power device, the ambient device, the device with the wake up receiver, or other devices.

In some embodiments, the ambient device (ambient power-enabled device) may also be referred to as an ambient IoT device (ambient power-enabled IoT device), which can acquire power or power by harvesting power from the surrounding environment (such as light power, heat power, wind power, etc.), and has extremely low complexity (which is less than or much less than conventional cellular IoT terminals, such as narrow band internet of things (NB-IoT), machine type of communication (MTC) terminals), and extremely low power consumption (several microwatts (uw) to several milliwatts (mw)).

In some embodiments, in a case where the first communication device is a device with a wake up receiver, the wake up receiver may receive a wake up signal, and in a case where the first communication device is required to turn on a main receiver, the first communication device may be instructed to turn on the main receiver; otherwise, the main receiver of the first communication device may be in a closed state or a power-off state.

It should be noted that the wake up receiver may also be referred to as a zero power receiver or a low power receiver, and the main receiver may also be referred to as a main transceiver, which is not limited in the embodiments of the present disclosure. The wake up receiver has the characteristics of extremely low cost, extremely low complexity and extremely low power consumption, and it mainly receives the wake up signal through an envelope detection-based mode. Therefore, the wake up signal (WUS) received by the wake up receiver is different from the modulation mode and waveform of the signal carried by the physical downlink control channel (PDCCH). The wake up signal is mainly an envelope signal that modulates the carrier signal by amplitude shift keying (ASK). The demodulation of the envelope signal is also mainly completed by driving the low power circuit based on the power provided by a wireless radio frequency signal, so the wake up receiver can be passive. The wake up receiver may also be powered by the terminal. Regardless of the power supply mode, the wake up receiver greatly reduces power consumption compared to the traditional receiver of a UE. The wake up receiver can be combined with the UE as an additional module of the main receiver, or the wake up receiver may be used alone as a wake up function module of the UE.

In some embodiments, the serving device is at least one of: an access point (AP), a station (STA), a terminal device, a base station, or a transmission reception point (TRP).

In some embodiments, the candidate device is at least one of: an AP, a STA, a terminal device, a base station, or a TRP.

In some embodiments, the candidate device may be a device within a certain range around the serving device, or the candidate device may be a device adjacent to the serving device. For example, the candidate device is a device within a certain range around the serving device from which the first communication device may receive signals, or the candidate device is a device adjacent to the serving device from which the first communication device may receive signals.

It should be noted that the type of the serving device and the type of the candidate device may be the same or different. For example, the serving device is an AP and the candidate device is a STA, which is not limited in the embodiments of the present disclosure.

In some embodiments, in a case where the first information is a reference signal measurement result of the serving device and/or a reference signal measurement result of the candidate device, the above S210 may specifically include:

performing, by the first communication device, mobility management based on the reference signal measurement result of the serving device and/or the reference signal measurement result of the candidate device, and a serving device selection criterion or a serving device reselection criterion.

It should be noted that the serving device selection criteria may be similar to a cell selection criteria configured by a higher layer (such as an S criteria, an R criteria, etc.), and the serving device reselection criteria may be similar to a cell reselection criteria configured by the higher layer, which will not be described in detail here.

In some embodiments, a measurement accuracy corresponding to the reference signal measurement result of the serving device and/or a measurement accuracy corresponding to the reference signal measurement result of the candidate device are determined based on an analogue-to-digital conversion (ADC) related capability of the first communication device, where different ADC related capabilities correspond to different measurement accuracies.

For example, two different ADC related capabilities represent that the number of bits of the ADC device is 1-bit and 3-bit respectively. An accuracy index of 3-bit may be 9 dB, and an accuracy index of 1-bit may be 12 dB. Two different sets of measurement accuracy indexes may be defined in a protocol, or a network may configure two different sets of measurement accuracy indexes, and the first communication device may determine which set of measurement accuracy index is used based on an ADC related capability of the first communication device.

In some embodiments, a measurement relaxation value corresponding to the reference signal measurement result of the serving device and/or a measurement relaxation value corresponding to the reference signal measurement result of the candidate device are determined based on an ADC related capability of the first communication device, where different ADC related capabilities correspond to different measurement relaxation values.

For example, for the same set of accuracy indexes, a plurality of different measurement relaxation values may be defined in a protocol, or a plurality of different measurement relaxation values may be configured by a network, and then the first communication device may determine which set of measurement accuracy index is used based on an ADC related capability of the first communication device.

In some embodiments, the first communications device determines the reference signal measurement result of the serving device and/or the reference signal measurement result of the candidate device (the corresponding measurement time length and accuracy may vary) during a process of measuring a reference signal in at least one frequency by adjusting at least one of following parameters:

increasing a number of samples associated with a measurement time length, reducing a discontinuous reception (DRX) cycle associated with the measurement time length, increasing a number of measurement times within the DRX cycle associated with the measurement time length, or reducing a scaling factor associated with the measurement time length.

Specifically, in the embodiment, a reference signal measurement accuracy of the serving device and/or a reference signal measurement accuracy of the candidate device may be improved by increasing the number of samples associated with the measurement time length; and/or the reference signal measurement accuracy of the serving device and/or the reference signal measurement accuracy of the candidate device may be improved by reducing the DRX cycle associated with the measurement time length; and/or the reference signal measurement accuracy of the serving device and/or the reference signal measurement accuracy of the candidate device may be improved by increasing the number of measurement times within the DRX cycle associated with the measurement time length; and/or the reference signal measurement accuracy of the serving device and/or the reference signal measurement accuracy of the candidate device may be improved by reducing the scaling factor associated with the measurement time length.

In some embodiments, a respective measurement time length at each frequency of the at least one frequency is determined based on the following Formula 1:

$$T_{layer} = N * DRX\ cycle * M \qquad\qquad Formula\ 1$$

where $T_{layer}$ represents the respective measurement time length at each frequency, N represents a number of samples associated with the measurement time length, DRX cycle represents a DRX cycle associated with the measurement time length, and M represents a scaling factor associated with the measurement time length.

For example, taking an on-off keying (OOK) reference signal as an example, a period of the OOK reference signal is assumed to be 20 ms, which may be understood as a period of the terminal device transmitting the OOK reference signal (similar to a transmitting period of a synchronization signal block (SSB)), and may also be understood as a measurement period of network configuration (similar to a measurement configuration period of SSB, i.e., synchronization measurement timing configuration (SMTC)). In addition, the network usually configures DRX, and the first communication device generally performs one time of measurement within the DRX cycle, as illustrated in FIG. 6. Assuming the number of samples is N (e.g., N = 5), the measurement time length required for each frequency is $T_{layer}$ (determined based on Formula 1), for example, M = 1, M = 1, 5, etc. If H frequencies are measured, a total measurement time length is $H*T_{layer}$.

Specifically, since the bit width of the ADC module of the wake up receiver or zero power device or ambient device is small (such as 1-bit or 3-bit), quantization accuracy of the ADC module is insufficient, resulting in insufficient measurement accuracy, therefore more sampling numbers or frequencies are required for compensation.

For example, a measurement interval is kept unchanged as the DRX cycle, and the number of samples N is directly increased (such as, from 5 to 8). Then after substituting the increase of N into the above Formula 1, the measurement time length will also increase accordingly.

For another example, when the number of samples N is increased, the DRX cycle is reduced. A separate but smaller DRX cycle may be configured for the wake up receiver or zero power device or ambient device, which indicates that measurements are performed at a smaller time interval and the measurement frequency is increased. The scaling factor M in the above Formula 1 may also be modified to $M_{wur}$, with a value less than or equal to 1, which indicates that a pluraltiy of measurements may be made in one DRX cycle (for example, $M_{wur}$ = 0.5 denotes two times of measurement in one DRX cycle). In this solution, the number of samples N also needs to be increased accordingly, so that the measurement time length $T_{layer}$ may remain basically unchanged, with a slight increase or decrease.

In some embodiments, the first communication device jointly measures a reference signal in at least one frequency through a wake up receiver of the first communication device and a main receiver of the first communication device to determine the reference signal measurement result of the serving device and/or the reference signal measurement result of the candidate device. That is, the measurement result of the wake up receiver (low power consumption, poor accuracy) and the main receiver (high power consumption, high accuracy) may be combined to balance power consumption and accuracy.

For a device equipped with both a wake up receiver and a main receiver. When there is no traffic, the main receiver of the device will enter a dormant state, and only the wake up receiver will detect the wake up signal (WUS), which consumes very little power. When the WUS is detected, the main receiver will be awakened to receive the corresponding data. For such a device, when performing measurement, a mode of jointly measuring the wake up receiver and the main receiver may be considered to balance power consumption and accuracy.

In some embodiments, a respective measurement time length at each frequency of the at least one frequency is determined based on the following Formula 2:

$$T_{layer} = T_1 + T_2 \hspace{4cm} \text{Formula 2}$$

where $T_1 = N_1 * DRX\ cycle_1 * M_1$, $T_2 = N_2 * DRX\ cycle_2 * M_2$,
where $T_{layer}$ represents the respective measurement time length at each frequency, $T_1$ represents a measurement time length of the wake up receiver, $T_2$ represents a measurement time length of the main receiver, $N_1$ represents a number of samples associated with the measurement time length of the wake up receiver, DRX $cycle_1$ represents a DRX cycle associated with the measurement time length of the wake up receiver, $M_1$ represents a scaling factor associated with the measurement time length of the wake up receiver, $N_2$ represents a number of samples associated with the measurement time length of the main receiver, DRX $cycle_2$ represents a DRX cycle associated with the measurement time length of the main receiver, and $M_2$ represents a scaling factor associated with the measurement time length of the main receiver.

In some embodiments, a respective measurement time length at each frequency of the at least one frequency is determined based on the following Formula 3:

$$T_{layer} = T_1, \text{ and } T_1 \geq T_2 \hspace{4cm} \text{Formula 3}$$

where $T_1 = N_1 * DRX\ cycle_1 * M_1$, $T_2 = N_2 * DRX\ cycle_2 * M_2$,
where $T_{layer}$ represents the respective measurement time length at each frequency, $T_1$ represents a measurement time length of the wake up receiver, $T_2$ represents a measurement time length of the main receiver, $N_1$ represents a number of samples associated with the measurement time length of the wake up receiver, DRX $cycle_1$ represents a DRX cycle associated with the measurement time length of the wake up receiver, $M_1$ represents a scaling factor associated with the measurement time length of the wake up receiver, $N_2$ represents a number of samples associated with the measurement time length of the main receiver, DRX $cycle_2$ represents a DRX cycle associated with the measurement time length of the main receiver, and $M_2$ represents a scaling factor associated with the measurement time length of the main receiver.

In some embodiments, a respective measurement time length at each frequency of the at least one frequency is determined based on the following Formula 4:

$$T_{layer} = T_2, \text{ and } T_2 > T_1 \hspace{4cm} \text{Formula 4}$$

where $T_1 = N_1 * DRX\ cycle_1 * M_1$, $T_2 = N_2 * DRX\ cycle_2 * M_2$,
where $T_{layer}$ represents the respective measurement time length at each frequency, $T_1$ represents a measurement time length of the wake up receiver, $T_2$ represents a measurement time length of the main receiver, $N_1$ represents a number of samples associated with the measurement time length of the wake up receiver, DRX $cycle_1$ represents a DRX cycle associated with the measurement time length of the wake up receiver, $M_1$ represents a scaling factor associated with the measurement time length of the wake up receiver, $N_2$ represents a number of samples associated with the measurement time length of the main receiver, DRX $cycle_2$ represents a DRX cycle associated with the measurement time length of the main receiver, and $M_2$ represents a scaling factor associated with the measurement time length of the main receiver.

In some embodiments, a value of $N_1$ and a value of $N_2$ are determined based on a network configuration, or the value of $N_1$ and the value of $N_2$ are determined based on the ADC related capability of the first communication device. For example, different network configurations and/or ADC related capabilities may use different values of $N_1$ and $N_2$.

In some embodiments, in a case where the value of $N_1$ and the value of $N_2$ are determined based on the network configuration, the network configuration is obtained via a broadcast message (such as a system information block (SIB)).

In some embodiments, the value of $N_1$ may be the same as or different from the value of $N_2$. For example, the total number of samples are assumed to be $N = 5$, in which $N_2$ ($N_2 = 2$) samples are measured by the main receiver and $N_1$ ($N_1 = 3$) samples are measured by the wake up receiver. In this way, both the high measurement accuracy of the main receiver and the low power consumption of the wake up receiver may be taken into account. The measurement accuracy will be reduced, and the specific value needs to be determined by combining the number of samples/ratio of samples of the wake up receiver and the main receiver and simulation.

In some embodiments, the value of $M_1$ may be the same as or different from the value of $M_2$.

In some embodiments, the reference signal measurement result of the serving device and/or the reference signal measurement result of the candidate device includes at least one of:

a reference signal received power (RSRP), a reference signal received quality (RSRQ), or a signal to interference plus noise ratio (SINR).

In some embodiments, in a case where the first information is the reference signal measurement result of the serving device and/or the reference signal measurement result of the candidate device, the above S210 may specifically include:

performing, by the first communication device, mobility management based on a magnitude relationship between the reference signal measurement result of the serving device and the reference signal measurement result of the candidate device.

Optionally, the reference signal measurement result of the serving device and/or the reference signal measurement result of the candidate device includes at least one of: an RSRP, an RSRQ or an SINR.

That is, in the embodiment, the first communication device does not need to accurately measure the value of the RSRP/RSRQ/SINR of the serving device and/or the value of RSRP/RSRQ/SINR of the candidate device. The first communication device only needs to determine a magnitude relationship between the RSRP/RSRQ/SINR of the candidate device and the RSRP/RSRQ/SINR of the serving device to determine whether to reselect the candidate device.

In some embodiments, performing, by the first communication device, the mobility management based on the magnitude relationship between the reference signal measurement result of the serving device and the reference signal measurement result of the candidate device, includes:

in a case where the reference signal measurement result of the candidate device is better than the reference signal measurement result of the serving device, reselecting, by the first communication device, the candidate device; or
in a case where reference signal measurement results of a plurality of candidate devices are all better than the reference signal measurement result of the serving device, reselecting, by the first communication device, a candidate device with a best reference signal measurement result among the plurality of candidate devices.

In some embodiments, performing, by the first communication device, the mobility management based on the magnitude relationship between the reference signal measurement result of the serving device and the reference signal measurement result of the candidate device, includes:

performing, by the first communication device, the mobility management based on the magnitude relationship between the reference signal measurement result of the serving device and the reference signal measurement result of the candidate device within a first evaluation window.

In some embodiments, the first evaluation window is agreed upon by a protocol, or the first evaluation window is determined by the first communications device, or the first evaluation window is configured by a network device. Optionally, the first evaluation window may be a periodic evaluation window.

In some embodiments, the first evaluation window may be one or more time units, where the time unit is one of: a symbol, a time slot, a microslot or a mini-slot, a subframe, a frame, a second, a minute, a millisecond, or a microsecond.

It should be noted that the first evaluation window may also be referred to as a time window or a time window opening, or similar names, which is not limited in the present disclosure.

In some embodiments, performing, by the first communication device, the mobility management based on the magnitude relationship between the reference signal measurement result of the serving device and the reference signal measurement result of the candidate device within the first evaluation window, includes:

in a case where the reference signal measurement result of the candidate device is better than the reference signal measurement result of the serving device for $S_1$ consecutive times within the first evaluation window, reselecting, by the first communication device, the candidate device;

in a case where reference signal measurement results of a plurality of candidate devices are better than the reference signal measurement result of the serving device for $S_1$ consecutive times within the first evaluation window, reselecting, by the first communication device, a candidate device with a best reference signal measurement result among the plurality of candidate devices;

in a case where a number of times that the reference signal measurement result of the candidate device being better than the reference signal measurement result of the serving device within the first evaluation window is greater than $S_2$, reselecting, by the first communication device, the candidate device;

in a case where a number of times that the reference signal measurement results of the plurality of candidate devices being better than the reference signal measurement result of the serving device within the first evaluation window is greater than $S_2$, reselecting, by the first communication device, the candidate device with the best reference signal measurement result among the plurality of candidate devices;

in a case where a proportion of the number of times that the reference signal measurement result of the candidate device being better than the reference signal measurement result of the serving device within the first evaluation window is greater than $S_3$, reselecting, by the first communication device, the candidate device; or

in a case where a proportion of the number of times that the reference signal measurement results of the plurality of candidate devices being better than the reference signal measurement result of the serving device within the first evaluation window is greater than $S_3$, reselecting, by the first communication device, the candidate device with the best reference signal measurement result among the plurality of candidate devices,

where $S_1$ and $S_2$ are both positive integers, and $S_3$ is a positive number.

In some embodiments, part or all of $S_1$, $S_2$ and $S_3$ are agreed upon by a protocol, or part or all of $S_1$, $S_2$ and $S_3$ are determined by the first communication device, or part or all of $S_1$, $S_2$ and $S_3$ are configured by a network device.

For example, as illustrated in FIG. 7, in each measurement period, the first communication device needs to measure the current serving device and one or more candidate devices. Limited by hardware of the wake up receiver, the first communication device may not be able to accurately measure the value of the RSRP/RSRQ/SINR of the serving device and the value of the RSRP/RSRQ/SINR of the candidate device, but may determine the relative relationship between the measurement result of the candidate device and the measurement result of the serving device. The embodiment takes RSRP measurement as an example (RSRQ, RSRP+RSRQ, or other measurement quantities may also be used) to compare whether the RSRP of the candidate device is greater than the RSRP of the serving device in each measurement period. In a case where the RSRP of the candidate device is greater than the RSRP of the serving device in each measurement cycle, the candidate device is recorded once. In the first evaluation window, the first communication device may perform the mobility management by the following modes:

in a case where the reference signal measurement result of the candidate device is better than the reference signal measurement result of the serving device for $S_1$ consecutive times within the first evaluation window, reselecting, by the first communication device, the candidate device;

in a case where reference signal measurement results of a plurality of candidate devices are better than the reference signal measurement result of the serving device for $S_1$ consecutive times within the first evaluation window, reselecting, by the first communication device, a candidate device with a best reference signal measurement result among the plurality of candidate devices;

in a case where a number of times that the reference signal measurement result of the candidate device being better than the reference signal measurement result of the serving device within the first evaluation window is greater than $S_2$, reselecting, by the first communication device, the candidate device;

in a case where a number of times that the reference signal measurement results of the plurality of candidate devices being better than the reference signal measurement result of the serving device within the first evaluation window is greater than $S_2$, reselecting, by the first communication device, the candidate device with the best reference signal measurement result among the plurality of candidate devices;

in a case where a proportion of the number of times that the reference signal measurement result of the candidate device being better than the reference signal measurement result of the serving device within the first evaluation window is greater than $S_3$, reselecting, by the first communication device, the candidate device; or

in a case where a proportion of the number of times that the reference signal measurement results of the plurality of candidate devices being better than the reference signal measurement result of the serving device within the first evaluation window is greater than $S_3$, reselecting, by the first communication device, the candidate device with the best reference signal measurement result among the plurality of candidate devices.

In some embodiments, in a case where the first information is a decoding result of a target message, the above S210 may specifically include:

determining, by the first communication device, whether to perform candidate device measurement for the mobility management based on a decoding result of a target message of a serving device; or

determining, by the first communication device, whether to reselect a candidate device based on the decoding result of the target message of the serving device and/or a decoding result of a target message of a candidate device.

In some embodiments, the target message is a system message or a broadcast message.

In some embodiments, in a case where the target message is the system message, the system message is a master information block (MIB) or a system information block (SIB).

In some embodiments, in a case where the target message is the broadcast message, the broadcast message is a paging message or a discovery message.

The embodiment may multiplex the MIB/paging message without requiring the reference signal and measurement.

In some embodiments, determining, by the first communication device, whether to perform the candidate device measurement for the mobility management based on the decoding result of the target message of the serving device, includes:

determining, by the first communication device, not to perform the candidate device measurement for the mobility management, in a case where decoding of the target message of the serving device succeeds, or in a case where decoding of the target message of the serving device succeeds for $Q_1$ times within a second evaluation window, or in a case where decoding of the target message of the serving device succeeds for $Q_2$ consecutive times within the second evaluation window, or in a case where a decoding success rate of the target message of the serving device is greater than or equal to a first threshold, or in a case where a decoding success rate of the target message of the serving device within the second evaluation window is greater than or equal to the first threshold; and/or

determining, by the first communication device, to perform the candidate device measurement for the mobility management, in a case where decoding of the target message of the serving device fails, or in a case where decoding of the target message of the serving device fails for $Q_3$ times within the second evaluation window, or in a case where decoding of the target message of the serving device fails for $Q_4$ consecutive times within the second evaluation window, or in a case where a decoding failure rate of the target message of the serving device is greater than or equal to a second threshold, or in a case where the decoding failure rate of the target message of the serving device within the second evaluation window is greater than or equal to the second threshold,

where $Q_1$, $Q_2$, $Q_3$ and $Q_4$ are all positive integers.

In some embodiments, part or all of $Q_1$, $Q_2$, $Q_3$ and $Q_4$ are agreed upon by a protocol, or part or all of $Q_1$, $Q_2$, $Q_3$ and $Q_4$ are determined by the first communication device, or part or all of $Q_1$, $Q_2$, $Q_3$ and $Q_4$ are configured by a network device.

In some embodiments, the first threshold is agreed upon by a protocol, or the first threshold is determined by the first communication device, or the first threshold is configured by a network device.

In some embodiments, the second threshold is agreed upon by a protocol, or the second threshold is determined by the first communication device, or the second threshold is configured by a network device.

In some embodiments, determining, by the first communication device, whether to reselect the candidate device based on the decoding result of the target message of the serving device and/or the decoding result of the target message of the candidate device, includes:

determining, by the first communication device, to reselect the candidate device, in a case where a decoding success rate of the target message of the serving device is less than a decoding success rate of the target message of the candidate device, or in a case where the decoding success rate of the target message of the candidate device is greater than or equal to a third threshold, or in a case where the decoding success rate of the target message of the serving device is less than a fourth threshold, or in a case where the decoding success rate of the target message of the candidate device is greater than or equal to the third threshold and a priority of the candidate device is higher than a priority of the serving device, or in a case where decoding of the target message of the candidate device succeeds for $W_1$ times within a third evaluation window, or in a case where decoding of the target message of the candidate device succeeds for $W_2$ consecutive times within the third evaluation window, or in a case where decoding of the decoding success rate of the target message of the candidate device within the third evaluation window is greater than or equal to the third threshold, or in a case where a number of times that decoding of the target message of the candidate device succeeds is $W_3$ more than a number of times that decoding of the target message of the serving device succeeds within the third evaluation window, or in a case where the decoding success rate of the target message of the candidate device is X% greater than the decoding success rate of the target message of the serving device within the third evaluation window; or

determining, by the first communication device, to reselect a candidate device with a highest decoding success rate of the target message among a plurality of candidate devices, in a case where the decoding success rate of the target message of the serving device is less than a decoding success rates of the target messages of the plurality of candidate devices, or in a case where the decoding success rates of the target messages of the plurality of candidate devices are greater than or equal to the third threshold, or in a case where the decoding success rates of the target messages of the plurality of candidate devices are greater than or equal to the third threshold and priorities of the plurality of candidate devices are higher than the priority of the serving device, or in a case where decoding of the target messages of the plurality of candidate devices succeeds for $W_1$ times within the third evaluation window, or in a case where decoding of the target messages of the plurality of candidate devices succeeds for $W_2$ consecutive times within the third evaluation window, or in a case where the decoding success rates of the target messages of the plurality of candidate devices within the third evaluation window are greater than or equal to the third threshold, or in a case where a number of times that decoding of the target messages of the plurality of candidate devices succeeds is $W_3$ more than the number of times that decoding of the target message of the serving device succeeds within the third evaluation window, or in a case where the decoding success rates of the target messages of the plurality of candidate devices within the third evaluation window are X% greater than the decoding success rate of the target message of the serving device;

where $W_1$, $W_2$ and $W_3$ are all positive integers, and X is a positive number.

In some embodiments, part or all of $W_1$, $W_2$, $W_3$ and X are agreed upon by a protocol, or part or all of $W_1$, $W_2$, $W_3$ and X are determined by the first communication device, or part or all of $W_1$, $W_2$, $W_3$ and X are configured by a network device.

In some embodiments, the third threshold is agreed upon by a protocol, or the third threshold is determined by the first communication device, or the third threshold is configured by a network device.

In some embodiments, in a case where the first information is the decoding result of the target channel, the above S210 may specifically include:

determining, by the first communication device, whether to perform candidate device measurement for the mobility management based on a decoding result of a target channel of a serving device; or

determining, by the first communication device, whether to reselect a candidate device based on the decoding result of the target channel of the serving device and/or a decoding result of a target message of the candidate device.

In some embodiments, the target channel is one of: a broadcast channel, a control channel, or a data channel.

In some embodiments, determining, by the first communication device, whether to perform the candidate device measurement for the mobility management based on the decoding result of the target channel of the serving device, includes:

determining, by the first communication device, not to perform the candidate device measurement for the mobility management, in a case where decoding of the target channel of the serving device succeeds, or in a case where decoding of the target channel of the serving device succeeds for $Q_1$ times within a second evaluation window, or in a case where decoding of the target channel of the serving device succeeds for $Q_2$ consecutive times within the second evaluation window, or in a case where a decoding success rate of the target channel of the serving device is greater than or equal to a first threshold, or in a case where a decoding success rate of the target channel of the serving device within the second evaluation window is greater than or equal to the first threshold; or

determining, by the first communication device, to perform the candidate device measurement for the mobility management, in a case where decoding of the target channel of the serving device fails, or in a case where decoding of the target channel of the serving device fails for $Q_3$ times within the second evaluation window, or in a case where decoding of the target channel of the serving device fails for $Q_4$ consecutive times within the second evaluation window, or in a case where a decoding failure rate of the target channel of the serving device is greater than or equal to a second threshold, or in a case where the decoding failure rate of the target channel of the serving device within the second evaluation window is greater than or equal to the second threshold,

where $Q_1$, $Q_2$, $Q_3$ and $Q_4$ are all positive integers.

In some embodiments, part or all of $Q_1$, $Q_2$, $Q_3$ and $Q_4$ are agreed upon by a protocol, or part or all of $Q_1$, $Q_2$, $Q_3$ and $Q_4$ are determined by the first communication device, or part or all of $Q_1$, $Q_2$, $Q_3$ and $Q_4$ are configured by a network device.

In some embodiments, determining, by the first communication device, whether to reselect the candidate device based on the decoding result of the target channel of the serving device and/or the decoding result of the target channel of the candidate device, includes:

determining, by the first communication device, to reselect the candidate device, in a case where a decoding success rate of the target channel of the serving device is less than a decoding success rate of the target channel of the candidate device, or in a case where the decoding success rate of the target channel of the candidate device is greater than or equal to a third threshold, or in a case where the decoding success rate of the target channel of the serving device is less than a fourth threshold, or in a case where the decoding success rate of the target channel of the candidate device is greater than or equal to the third threshold and a priority of the candidate device is higher than the priority of the serving device, or in a case where decoding of the target channel of the candidate device succeeds for $W_1$ times within a third evaluation window, or in a case where decoding of the target channel of the candidate device succeeds for $W_2$ consecutive times within the third evaluation window, or in a case where the decoding success rate of the target channel of the candidate device within the third evaluation window is greater than or equal to the third threshold, or in a case where a number of times that decoding of the target channel of the candidate device succeeds within the third evaluation window is $W_3$ more than a number of times that decoding of the target channel of the serving device succeeds, or in a case where the decoding success rate of the target channel of the candidate device within the third evaluation window is X% greater than the decoding success rate of the target channel of the serving device; or determining, by the first communication device, to reselect a candidate device with a highest decoding success rate of the target channel among a plurality of candidate devices, in a case where the decoding success rate of the target channel of the serving device is less than a decoding success rates of the target channels of the plurality of candidate devices, or in a case where the decoding success rates of the target channels of the plurality of candidate devices are greater than or equal to the third threshold, or in a case where the decoding success rates of the target channels of the plurality of candidate devices are greater than or equal to the third threshold and the priorities of the plurality of candidate devices are higher than the priority of the serving device, or in a case where decoding of the target channels of the plurality of candidate devices succeeds for $W_1$ times within the third evaluation window, or in a case where decoding of the target channels of the plurality of candidate devices succeeds for $W_2$ consecutive times within the third evaluation window, or in a case where the decoding success rates of the target channels of the plurality of candidate devices within the third evaluation window are greater than or equal to the third threshold, or in a case where a number of times that decoding of the target channels of the plurality of candidate devices succeeds within the third evaluation window is $W_3$ more than a number of times that decoding of the target channel of the serving device succeeds, or in a case where the decoding success rates of the target channels of the plurality of candidate devices within the third evaluation window are X% greater than the decoding success rate of the target channel of the serving device, where $W_1$, $W_2$ and $W_3$ are all positive integers, and X is a positive number.

In some embodiments, part or all of $W_1$, $W_2$, $W_3$ and X are agreed upon by a protocol, or part or all of $W_1$, $W_2$, $W_3$ and X are determined by the first communication device, or part or all of $W_1$, $W_2$, $W_3$ and X are configured by a network device.

In some embodiments, in a case where the first communication device is a zero power device or an ambient device, and the first information is the power harvesting information of the first communication device, the above S210 may specifically include:

determining, by the first communication device, whether to perform candidate device measurement for the mobility management based on the power harvesting information of the first communication device in a case where the serving device provides a power supply signal; or

determining, by the first communication device, whether to reselect the candidate device based on the power harvesting information of the first communication device in a case where the serving device and the candidate device respectively provide a power supply signal.

The embodiment may be suitable for a device that harvests power based on a radio frequency power supply signal, or a device that supplies power using multiple signals.

The embodiment does not require an additional reference signal for measurement.

In some embodiments, determining, by the first communication device, whether to perform the candidate device measurement for the mobility management based on the power harvesting information of the first communication device in the case where the serving device provides the power supply signal, includes:

determining, by the first communication device, not to perform the candidate device measurement for the mobility management, if power harvesting efficiency of the first communication device in a case where the serving device provides the power supply signal is greater than or equal to a fourth threshold, or if a time length required for the first communication device to complete a charge in a case where the serving device provides the power supply signal is less than a fifth threshold, or if a time length required for the first communication device to charge Y% in a case where the serving device provides the power supply signal is less than a sixth threshold, or if a time length required for the first communication device to charge from $Y_1$% to $Y_2$% in a case where the serving device provides the power supply signal is less than a seventh threshold, or if a charging amount of the first communication device within a target time length in a case where the serving device provides the power supply signal is greater than an eighth threshold; and/or

determining, by the first communication device, to perform the candidate device measurement for the mobility management, if the power harvesting efficiency of the first communication device in a case where the serving device provides the power supply signal is less than the fourth threshold, or if the time length required for the first communication device to complete the charge in a case where the serving device provides the power supply signal is greater than or equal to the fifth threshold, or if the time length required for the first communication device to charge Y% in a case where the serving device provides the power supply signal is greater than or equal to the sixth threshold, or if the time length required for the first communication device to charge from $Y_1$% to $Y_2$% in a case where the serving device provides the power supply signal is greater than or equal to the seventh threshold, or if the charging amount of the first communication device within the target time length in a case where the serving device provides the power supply signal is less than or equal to the eighth threshold,

where $Y_1$, $Y_2$ and Y are all positive numbers.

In some embodiments, the fourth threshold is agreed upon by a protocol, or the fourth threshold is determined by the first communication device, or the fourth threshold is configured by a network device.

In some embodiments, the fifth threshold is agreed upon by a protocol, or the fifth threshold is determined by the first communication device, or the fifth threshold is configured by a network device.

In some embodiments, the sixth threshold is agreed upon by a protocol, or the sixth threshold is determined by the first communication device, or the sixth threshold is configured by a network device.

In some embodiments, the seventh threshold is agreed upon by a protocol, or the seventh threshold is determined by the first communication device, or the seventh threshold is configured by a network device.

In some embodiments, the eighth threshold is agreed upon by a protocol, or the eighth threshold is determined by the first communication device, or the eighth threshold is configured by a network device.

In some embodiments, part or all of $Y_1$, $Y_2$ and Y are agreed upon by a protocol, or part or all of $Y_1$, $Y_2$ and Y are determined by the first communication device, or part or all of $Y_1$, $Y_2$ and Y are configured by a network device.

In some embodiments, determining, by the first communication device, whether to reselect the candidate device based on the power harvesting information of the first communication device in a case where the serving device and the candidate device respectively provide a power supply signal, includes:

determining, by the first communication device, to reselect the candidate device, if power harvesting efficiency of the first communication device in a case where the serving device provides the power supply signal is less than power harvesting efficiency of the first communication device in a case where the candidate device provides the power supply signal, or if a time length required for the first communication device to complete a charge in a case where the serving device provides the power supply signal exceeds a time length required for the first communication device to complete the charge in a case where the candidate device provides the power supply signal, or if the time length required for the first communication device to complete the charge in a case where the serving device provides the power supply signal exceeds T seconds or T% of the time length required for the first communication device to complete the charge in a case where the candidate device provides the power supply signal, or if a charging amount of the first communication device within a target time length in a case where the candidate device provides the power supply signal is K or K% more than a charging amount of the first communication device within the target time length in a case where the serving device provides with the power supply signal, or if a time length required for the first communication device to charge Y% in a case where the serving device provides the power supply signal exceeds a time length required for the first communication device to charge Y% in a case where the candidate device provides the power supply signal, or if a time length required for the first communication device to charge from $Y_1$% to $Y_2$% in a case where the serving device provides the power supply signal exceeds a time length required for the first communication device to charge from $Y_1$% to $Y_2$% in a case where the candidate device provides the power supply signal; or

determining, by the first communication device, to reselect a candidate device with highest power harvesting efficiency among a plurality of candidate devices, if the power harvesting efficiency of the first communication device in a case where the serving device provides the power supply signal is less than power harvesting efficiency of the first communication device in a case where the plurality of candidate devices respectively provide a power supply signal, or if the time length required for the first communication device to complete the charge in a case where the serving device provides the power supply signal exceeds a time length required for the first communication device to complete the charge in a case where the plurality of candidate devices respectively provide the power supply signal, or if the time length required for the first communication device to complete the charge in a case where the serving device provides the power supply signal exceeds T seconds or T% of the time length required for the first communication device to complete the charge in a case where the plurality of candidate devices respectively provide the power supply signal, or if a charging amount of the first communication device within the target time length in a case where the plurality of candidate devices respectively provide the power supply signal is K or K% more than the charging amount of the first communication device within the target time length in a case where the serving device provides the power supply signal, or if the time length required for the first communication device to charge Y% in a case where the serving device provides the power supply signal exceeds a time length required for the first communication device to charge Y% in a case where the plurality of candidate devices respectively provide the power supply signal, or if the time length required for the first communication device to charge from $Y_1$% to $Y_2$% in a case where the serving device provides the power supply signal exceeds a time length required for the first communication device to charge from $Y_1$% to $Y_2$% in a case where the plurality of candidate devices respectively provide the power supply signal,

where T, K, $Y_1$, $Y_2$ and Y are all positive numbers.

In some embodiments, part or all of T, K, $Y_1$, $Y_2$ and Y are agreed upon by a protocol, or part or all of T, K, $Y_1$, $Y_2$ and Y are determined by the first communication device, or part or all of T, K, $Y_1$, $Y_2$ and Y are configured by a network device.

In some embodiments, the power of the power supply signal provided by the serving device is the same as the power of the power supply signal provided by the candidate device; and/or, a duty cycle (duty ratio) of the power supply signal provided by the serving device is the same as a duty cycle of the power supply signal provided by the candidate device.

In some embodiments, the power supply signals provided by different devices are orthogonal. That is, the power supply signals of different devices may be distinguished from the time domain or the frequency domain.

In some embodiments, the power harvesting efficiency may be expressed as follows:

time length required for completing a full charge, where the shorter time length required, the higher power harvesting efficiency;

whether a charge is completed within a fixed time length, or a charging amount within a fixed time length, where the greater charging amount, the higher efficiency.

It should be noted that in the embodiments of the present disclosure, the standard for completing a charge is: capable of drive a logic circuit, or a battery being fully charged.

For example, a plurality of devices (a serving device and one or more candidate devices) all are assumed to transmit a power supply signal, and the power supply signals of different devices are orthogonal (such as time-division multiplexing (TDM) and frequency-division multiplexing (FDM)). In the embodiment, TDM is taken as an example, and power supply signals of different devices are transmitted in different time periods. As illustrated in FIG. 8, the first communication device records the time Ti required for completing a charge based on the power supply signals of different devices, and selects the device (i.e., the serving device) with the shortest time (i.e., with highest charging efficiency) to reside. When the charging time Ti of the serving device is greater than a certain threshold value, the first communication device will consider to reselecte a resident device and select to a candidate device with shorter charging time. The specific reselection condition may be: the charging time Ti of the candidate device being delta_T or $X_1$% less than the charging time T1 of the serving device.

When the determination condition is the charging amount within a fixed time length, for example, how many milliwatts (mw) of electricity may be harvested/stored within 1s, or the percentage of the total electricity. The above conditions may be modified accordingly as selecting the device with the largest charge amount within a fixed time length for residence. When the charge capacity of the device that the first communication device resides is lower than a certain threshold value, the first communication device will consider to reselecte a device to be resided and select a candidate device with a larger charge capacity. The specific re-selection condition may be: a charging ratio of the candidate device being $X_2$ [mw] or $X_3$% more than a charging amount of the serving device within a fixed time length.

In some embodiments, when the power harvesting efficiency is determined, it is necessary to combine the characteristics of the power supply signals transmitted from different devices, such as duty cycle, signal power, etc. In a case where these characteristics of the power supply signals are the same, comparion may be made directly; in a case where these characteristics of the power supply signals are different, conversion is required.

For a specific example, duty cycles of power supply signals provided by different devices are different. In a case where a duty cycle of a device 1 is 80%, power may be harvested in only 80% of the time, and a duty cycle of a device 2 is 60%. Conversion is required when the power harvesting efficiency is calculated.

For example, in a case where the determination is based on time length required for completing a charge, actual equivalent time length required for different devices needs to be converted based on the duty cycle. Assuming that the full charging is required, the time length required for the device 1 is $T_1$ = 10s, and the equivalent time is T1' = T1 * 0.8 = 8s; the time length required for the device 2 is T2 = 10s, and the equivalent time is T2' = T2 * 0.6 = 6s.

For another example, in a case where the determination is based on the charging amount within a fixed time length, different devices are charged at a fixed time length, and after the charging amount is determined, the equivalent charging amount is converted based on the duty cycle. Assuming that the charging capacity within T = 10s needs to be determined, the charging amount of the device 1 within T = 10s is E1 = 5 microwatts (uw), and the equivalent charging amount is E1' = E1/0.8 = 6.25s; the charging amount of the device 2 within T = 10s is E2 = 5uw, and the equivalent charging amount is E2' = E2/0.6 = 8.33s.

For another example, in a case where the determination is based on the time length required for completing a fixed equivalent charget, the equivalent charge amounts corresponding to different devices need to be converted based on the duty cycle. Assuming the baseline is that the device is fully charged at a duty cycle of 100%, the device 1 only needs to record the time T1 required for 80% of full charging, and the device 2 only needs to record the time T2 required for 60% of the full charging. The sizes of T1 and T2 are directly compared. The smaller the size, the higher the charging efficiency.

For another example, in a case where the determination is based on the charging amount within specific time, different devices are charged at different charging times based on their duty cycles, and the charging amounts are directly compared after being determined. Assuming that the baseline is the charging amount of the device within T = 10s in a case where the duty cycle is 100%, the charging amount of the device 1 within the equivalent time of T1 = T/0.8 = 12.5s is E1 = 5uw; the charging amount of the device 2 within the equivalent time of T2 = T/0.6 = 16.6s is E2 = 5uw. The sizes of E1 and E2 are directly compared. The larger the E1, the higher the charging efficiency.

Therefore, in the embodiments of the present disclosure, the first communication device may perform mobility management based on the first information, where the first information includes at least one of: a reference signal measurement result of the serving device and/or a reference signal measurement result of the candidate device, a decoding result of the target message, a decoding result of the target channel, or power harvesting information of the first communication device. In this way, more flexible mobility management can be implemented, and it is suitable for a zero power device or an ambient device or a device with a wake up receiver.

In combination with FIG. 5 to FIG. 8, the method embodiments of the present disclosure are described in detail above. In combination with FIG. 9 to FIG. 12, the apparatus embodiments of the present disclosure will be described in detail below. It should be understood that the apparatus embodiments and the method embodiments correspond to each other, and similar descriptions may refer to the method embodiment.

FIG. 9 shows a schematic block diagram of a communication device 300 according to the embodiments of the present disclosure. The communication device 300 is a first communication device. As illustrated in FIG. 9, the communication device 300 includes:

 a processing unit 310, configured to perform mobility management based on first information,
 where the first communication device is a zero power device or an ambient device, or the first communication device is a device with a wake up receiver; the mobility management includes at least one of: serving device selection, serving device reselection, or serving device handover,
 where the first information is at least one of: a reference signal measurement result of a serving device and/or a reference signal measurement result of a candidate device, a decoding result of a target message, a decoding result of a target channel, or power harvesting information of the first communication device.

In some embodiments, in a case where the first information is the reference signal measurement result of the serving device and/or the reference signal measurement result of the candidate device, the processing unit 310 is specifically configured to:
perform the mobility management based on the reference signal measurement result of the serving device and/or the reference signal measurement result of the candidate device, and a serving device selection criterion or a serving device reselection criterion.

In some embodiments, a measurement accuracy corresponding to the reference signal measurement result of the serving device and/or a measurement accuracy corresponding to the reference signal measurement result of the candidate device are determined based on an analogue-to-digital conversion (ADC) related capability of the first communication device, where different ADC related capabilities correspond to different measurement accuracies.

In some embodiments, a measurement relaxation value corresponding to the reference signal measurement result of the serving device and/or a measurement relaxation value corresponding to the reference signal measurement result of the candidate device are determined based on the ADC related capability of the first communication device, where different ADC related capabilities correspond to different measurement relaxation values.

In some embodiments, the processing unit 310 is further configured to determine the reference signal measurement result of the serving device and/or the reference signal measurement result of the candidate device during a process of measuring a reference signal in at least one frequency by adjusting at least one of following parameters:

increasing a number of samples associated with a measurement time length, reducing a discontinuous reception (DRX) cycle associated with the measurement time length, increasing a number of measurement times within the DRX cycle associated with the measurement time length, or reducing a scaling factor associated with the measurement time length.

In some embodiments, a respective measurement time length at each frequency of the at least one frequency is determined based on the following Formula:

$$T_{layer} = N * DRX\ cycle * M,$$

where $T_{layer}$ represents the respective measurement time length at each frequency, N represents a number of samples associated with the measurement time length, DRX cycle represents a DRX cycle associated with the measurement time length, and M represents a scaling factor associated with the measurement time length.

In some embodiments, the processing unit 310 is further configured to jointly measure a reference signal in at least one frequency through a wake up receiver of the first communication device and a main receiver of the first communication device to determine the reference signal measurement result of the serving device and/or the reference signal measurement result of the candidate device.

In some embodiments, a respective measurement time length at each frequency of the at least one frequency is determined based on the following Formula:

$$T_{layer} = T_1 + T_2;\ or,\ T_{layer} = T_1\ and\ T_1 \geq T_2;\ or,\ T_{layer} = T_2\ and\ T_2 > T_1,$$

where $T_1 = N_1 * DRX\ cycle_1 * M_1$, $T_2 = N_2 * DRX\ cycle_2 * M_2$,

where $T_{layer}$ represents the respective measurement time length at each frequency, $T_1$ represents a measurement time length of the wake up receiver, $T_2$ represents a measurement time length of the main receiver, $N_1$ represents a number of samples associated with the measurement time length of the wake up receiver, $DRX\ cycle_1$ represents a DRX cycle associated with the measurement time length of the wake up receiver, $M_1$ represents a scaling factor associated with the measurement time length of the wake up receiver, $N_2$ represents a number of samples associated with the measurement time length of the main receiver, $DRX\ cycle_2$ represents a DRX cycle associated with the measurement time length of the main receiver, and $M_2$ represents a scaling factor associated with the measurement time length of the main receiver.

In some embodiments, a value of $N_1$ and a value of $N_2$ are determined based on a network configuration, or the value of $N_1$ and the value of $N_2$ are determined based on the ADC related capability of the first communication device.

In some embodiments, in a case where the value of $N_1$ and the value of $N_2$ are determined based on a network configuration, the network configuration is obtained via a broadcast message.

In some embodiments, in a case where the first information is the reference signal measurement result of the serving device and/or the reference signal measurement result of the candidate device, the processing unit 310 is specifically configured to:

perform the mobility management based on a magnitude relationship between the reference signal measurement result of the serving device and the reference signal measurement result of the candidate device.

In some embodiments, the processing unit 310 is specifically configured to:

in a case where the reference signal measurement result of the candidate device is better than the reference signal measurement result of the serving device, reselect the candidate device; or

in a case where the reference signal measurement results of a plurality of candidate devices are all better than the reference signal measurement result of the serving device, reselect a candidate device with a best reference signal measurement result among the plurality of candidate devices.

In some embodiments, the processing unit 310 is specifically configured to:

perform the mobility management based on the magnitude relationship between the reference signal measurement result of the serving device and the reference signal measurement result of the candidate device within a first evaluation window.

In some embodiments, the processing unit 310 is specifically configured to:

in a case where the reference signal measurement result of the candidate device is better than the reference signal measurement result of the serving device for $S_1$ consecutive times within the first evaluation window, reselect the candidate device;

in a case where the reference signal measurement results of the plurality of candidate devices are better than the reference signal measurement result of the serving device for $S_1$ consecutive times within the first evaluation window, reselect a candidate device with a best reference signal measurement result among the plurality of candidate devices;

in a case where a number of times that the reference signal measurement result of the candidate device is better than the reference signal measurement result of the serving device within the first evaluation window is greater than $S_2$, reselect the candidate device;

in a case where a number of times that the reference signal measurement results of the plurality of candidate devices are better than the reference signal measurement result of the serving device within the first evaluation window is greater than $S_2$, reselect the candidate device with the best reference signal measurement result among the plurality of candidate devices;

in a case where a proportion of the number of times that the reference signal measurement result of the candidate device is better than the reference signal measurement result of the serving device within the first evaluation window is greater than $S_3$, reselect the candidate device; or

in a case where a proportion of the number of times that the reference signal measurement results of the plurality of candidate devices are better than the reference signal measurement result of the serving device within the first evaluation window is greater than $S_3$, reselect the candidate device with the best reference signal measurement result among the plurality of candidate devices,

where $S_1$ and $S_2$ are both positive integers, and $S_3$ is a positive number.

In some embodiments, the reference signal measurement result of the serving device and/or the reference signal measurement result of the candidate device includes at least one of:

a reference signal received power (RSRP), a reference signal received quality (RSRQ), or a signal to interference and noise ratio (SINR).

In some embodiments, in a case where the first information is the decoding result of the target message, the processing unit 310 is specifically configured to:

determine whether to perform candidate device measurement for the mobility management based on a decoding result of a target message of a serving device; or,

determine whether to reselect the candidate device based on the decoding result of the target message of the serving device and/or a decoding result of a target message of a candidate device.

In some embodiments, the processing unit 310 is specifically configured to:

determine not to perform the candidate device measurement for the mobility management, in a case where decoding of the target message of the serving device succeeds, or in a case where decoding of the target message of the serving device succeeds for $Q_1$ times within a second evaluation window, or in a case where decoding of the target message of the serving device succeeds for $Q_2$ consecutive times within the second evaluation window, or in a case where a decoding success rate of the target message of the serving device is greater than or equal to a first threshold, or in a case where a decoding success rate of the target message of the serving device within the second evaluation window is greater than or equal to the first threshold; and/or

determining to perform the candidate device measurement for the mobility management, in a case where decoding of the target message of the serving device fails, or in a case where decoding of the target message of the serving device fails for $Q_3$ times within the second evaluation window, or in a case where decoding of the target message of the serving device fails for $Q_4$ consecutive times within the second evaluation window, or in a case where a decoding failure rate of the target message of the serving device is greater than or equal to a second threshold, or in a case where the decoding failure rate of the target message of the serving device within the second evaluation window is greater than or equal to the second threshold,

where $Q_1$, $Q_2$, $Q_3$ and $Q_4$ are all positive integers.

In some embodiments, the processing unit 310 is specifically configured to:

determine to reselect the candidate device, in a case where a decoding success rate of the target message of the serving device is less than a decoding success rate of the target message of the candidate device, or in a case where the decoding success rate of the target message of the candidate device is greater than or equal to a third threshold, or in a case where the decoding success rate of the target message of the serving device is less than a fourth threshold, or in a case where the decoding success rate of the target message of the candidate device is greater than or equal to the third threshold and a priority of the candidate device is higher than a priority of the serving device, or in a case where decoding of the target message of the candidate device succeeds for $W_1$ times within a third evaluation window, or in a case where decoding of the target message of the candidate device succeeds for $W_2$ consecutive times within the third evaluation window, or in a case where the decoding success rate of the target message of the candidate device within the third evaluation window is greater than or equal to the third threshold, or in a case where a number of times that decoding of the target message of the candidate device succeeds within the third evaluation window is $W_3$ more than a number of times that decoding of the target message of the serving device succeeds, or in a case where the decoding success rate of the target message of the candidate device within the third evaluation window is X% greater than the decoding success rate of the target message of the serving device; or

determine to reselect a candidate device with a highest decoding success rate of the target message among a plurality of candidate devices, in a case where the decoding success rate of the target message of the serving device is less than decoding success rates of the target messages of the plurality of candidate devices, or in a case where the decoding success rates of the target messages of the plurality of candidate devices are greater than or equal to the third threshold, or in a case where the decoding success rates of the target messages of the plurality of candidate devices are greater than or equal to the third threshold and priorities of the plurality of candidate devices are higher than the priority of the serving device, or in a case where decoding of the target messages of the plurality of candidate devices succeeds for $W_1$ times within the third evaluation window, or in a case where decoding of the target messages of the plurality of candidate devices succeeds for $W_2$ consecutive times within the third evaluation window, or in a case where the decoding success rates of the target messages of the plurality of candidate devices within the third evaluation window are greater than or equal to the third threshold, or in a case where a number of times that decoding of the target messages of the plurality of candidate devices succeeds within the third evaluation window is $W_3$ more than the number of times that decoding of the target message of the serving device succeeds, or in a case where the decoding success rates of the target messages of the plurality of candidate devices within the third evaluation window are X% greater than the decoding success rate of the target message of the serving device;

where $W_1$, $W_2$ and $W_3$ are all positive integers, and X is a positive number.

In some embodiments, the target message is a system message or a broadcast message.

In some embodiments, in a case where the target message is the system message, the system message is a master information block (MIB) or a system information block (SIB); or

in a case where the target message is the broadcast message, the broadcast message is a paging message or a discovery message.

In some embodiments, in a case where the first information is the decoding result of the target channel, the processing unit 310 is specifically configured to:

determine whether to perform candidate device measurement for the mobility management based on a decoding result of a target channel of the serving device; or

determine whether to reselect the candidate device based on the decoding result of the target channel of the serving device and/or a decoding result of a target message of the candidate device.

In some embodiments, the processing unit 310 is specifically configured to:

determine not to perform the candidate device measurement for the mobility management, in a case where decoding of the target channel of the serving device succeeds, or in a case where decoding of the target channel of the serving device succeeds for $Q_1$ times within a second evaluation window, or in a case where decoding of the target channel of the serving device succeeds for $Q_2$ consecutive times within the second evaluation window, or in a case where a decoding success rate of the target channel of the serving device is greater than or equal to a first threshold, or in a case where the decoding success rate of the target channel of the serving device within the second evaluation window is greater than or equal to the first threshold; and/or

determine to perform the candidate device measurement for the mobility management, in a case where decoding of the target channel of the serving device fails, or in a case where decoding of the target channel of the serving device fails for $Q_3$ times within the second evaluation window, or in a case where decoding of the target channel of the serving device fails for $Q_4$ consecutive times within the second evaluation window, or in a case where a decoding failure rate of the target channel of the serving device is greater than or equal to a second threshold, or in a case where the decoding failure rate of the target channel of the serving device within the second evaluation window is greater than or equal to the second threshold,

where $Q_1$, $Q_2$, $Q_3$ and $Q_4$ are all positive integers.

In some embodiments, the processing unit 310 is specifically configured to:

determine to reselect the candidate device, in a case where a decoding success rate of the target channel of the serving device is less than a decoding success rate of the target channel of the candidate device, or in a case where the decoding success rate of the target channel of the candidate device is greater than or equal to a third threshold, or in a case where the decoding success rate of the target channel of the serving device is less than a fourth threshold, or in a case where the decoding success rate of the target channel of the candidate device is greater than or equal to the third threshold and a priority of the candidate device is higher than the priority of the serving device, or in a case where decoding of the target channel of the candidate device succeeds for $W_1$ times within a third evaluation window, or in a case where decoding of the target channel of the candidate device succeeds for $W_2$ consecutive times within the third evaluation window, or in a case where the decoding success rate of the target channel of the candidate device within the third evaluation window is greater than or equal to the third threshold, or in a case where a number of times that decoding of the target channel of the candidate device succeeds within the third evaluation window is $W_3$ more than a number of times that decoding of the target channel of the serving device succeeds, or in a case where the decoding success rate of the target channel of the candidate device within the third evaluation window is X% greater than the decoding success rate of the target channel of the serving device; or

determine to reselect a candidate device with a highest decoding success rate of the target channel among a plurality of candidate devices, in a case where the decoding success rate of the target channel of the serving device is less than decoding success rates of the target channels of the plurality of candidate devices, or in a case where the decoding success rates of the target channels of the plurality of candidate devices are greater than or equal to the third threshold, or in a case where the decoding success rates of the target channels of the plurality of candidate devices are greater than or equal to the third threshold and priorities of the plurality of candidate devices are higher than the priority of the serving device, or in a case where decoding of the target channels of the plurality of candidate devices succeeds for $W_1$ times within the third evaluation window, or in a case where decoding of the target channels of the plurality of candidate devices succeeds for $W_2$ consecutive times within the third evaluation window, or in a case where the decoding success rates of the target channels of the plurality of candidate devices within the third evaluation window are greater than or equal to the third threshold, or in a case where a number of times that decoding of the target channels of the plurality of candidate devices succeeds within the third evaluation window is $W_3$ more than a number of times that decoding of the target channel of the serving device succeeds, or in a case where the decoding success rates of the target channels of the plurality of candidate devices within the third evaluation window are X% greater than the decoding success rate of the target channel of the serving device,

where $W_1$, $W_2$ and $W_3$ are all positive integers, and X is a positive number.

In some embodiments, the target channel is one of: a broadcast channel, a control channel, or a data channel.

In some embodiments, in a case where the first communication device is a zero power device or an ambient device, and the first information is power harvesting information of the first communication device, the processing unit 310 is specifically configured to:

determine whether to perform candidate device measurement for the mobility management based on the power harvesting information in a case where the serving device provides a power supply signal; or
determine whether to reselect the candidate device based on the power harvesting information, in a case where the serving device and the candidate device respectively provide a power supply signal.

In some embodiments, the processing unit 310 is specifically configured to:

determine not to perform the candidate device measurement for the mobility management, if power harvesting efficiency of the first communication device in a case where the serving device provides the power supply signal is greater than or equal to a fourth threshold, or if a time length required for the first communication device to complete a charge in a case where the serving device provides the power supply signal is less than a fifth threshold, or if a time length required for the first communication device to charge Y% in a case where the serving device provides the power supply signal is less than a sixth threshold, or if a time length required for the first communication device to charge from $Y_1$% to $Y_2$% in a case where the serving device provides the power supply signal is less than a seventh threshold, or if a charging amount of the first communication device within a target time length in a case where the serving device provides the power supply signal is greater than an eighth threshold; and/or
determine to perform the candidate device measurement for the mobility management, if the power harvesting efficiency of the first communication device in a case where the serving device provides the power supply signal is less than the fourth threshold, or if the time length required for the first communication device to complete the charge in a case where the serving device provides the power supply signal is greater than or equal to the fifth threshold, or if the time length required for the first communication device to charge Y% in a case where the serving device provides the power supply signal is greater than or equal to the sixth threshold, or if the time length required for the first communication device to charge from $Y_1$% to $Y_2$% in a case where the serving device provides the power supply signal is greater than or equal to the seventh threshold, or if the charging amount of the first communication device within the target time length in a case where the serving device provides the power supply signal is less than or equal to the eighth threshold,
where $Y_1$, $Y_2$ and Y are all positive numbers.

In some embodiments, the processing unit 310 is specifically configured to:

determine to reselect the candidate device, if power harvesting efficiency of the first communication device in a case where the serving device provides the power supply signal is less than power harvesting efficiency of the first communication device in a case where the candidate device provides the power supply signal, or if a time length required for the first communication device to complete a charge in a case where the serving device provides the power supply signal exceeds a time length required for the first communication device to complete the charge in a case where the candidate device provides the power supply signal, or if the time length required for the first communication device to complete the charge in a case where the serving device provides the power supply signal exceeds T seconds or T% of the time length required for the first communication device to complete the charge in a case where the candidate device provides the power supply signal, or if a charging amount of the first communication device within a target time length in a case where the candidate device provides the power supply signal is K or K% more than a charging amount of the first communication device within the target time length in a case where the serving device provides with the power supply signal, or if a time length required for the first communication device to charge Y% in a case where the serving device provides the power supply signal exceeds a time length required for the first communication device to charge Y% in a case where the candidate device provides the power supply signal, or if a time length required for the first communication device to charge from $Y_1$% to $Y_2$% in a case where the serving device provides the power supply signal exceeds a time length required for the first communication device to charge from $Y_1$% to $Y_2$% in a case where the candidate device provides the power supply signal; or
determine to reselect a candidate device with highest power harvesting efficiency among a plurality of candidate devices, if the power harvesting efficiency of the first communication device in a case where the serving device provides the power supply signal is less than power harvesting efficiency of the first communication device in a case where the plurality of candidate devices respectively provide a power supply signal, or if the time length required for the first communication device to complete the charge in a case where the serving device provides the power supply signal exceeds a time length required for the first communication device to complete the charge in a case where the plurality of candidate devices respectively provide the power supply signal, or if the time length required for the first communication device to complete the charge in a case where the serving device provides the power supply signal exceeds T seconds or T% of the time length required for the first communication device to complete the charge in a case where the plurality of candidate devices respectively provide the power supply signal, or if a charging amount of the first communication device within the target time length in a case where the plurality of candidate devices respectively provide the power supply signal is K or K% more than the charging amount of the first communication device within the target time length in a case where the serving device provides the power supply signal, or if the time length required for the first communication device to charge Y% in a case where the serving device provides the power supply signal exceeds a time length required for the first communication device to charge Y% in a case where the plurality of candidate devices respectively provide the power supply signal, or if the time length required for the first communication device to charge from $Y_1$% to $Y_2$% in a case where the serving device provides the power supply signal exceeds a time length required for the first communication device to charge from $Y_1$% to $Y_2$% in a case where the plurality of candidate devices respectively provide the power supply signal,
where T, K, $Y_1$, $Y_2$ and Y are all positive numbers.

In some embodiments, power of the power supply signal provided by the serving device is the same as power of the power supply signal provided by the candidate device; and/or, a duty cycle of the power supply signal provided by the serving device is the same as a duty cycle of the power supply signal provided by the candidate device.

In some embodiments, the serving device is at least one of: an access point (AP), a station (STA), a terminal device, a base station, or a transmission reception point (TRP); and/or, the candidate device is at least one of: an AP, a STA, a terminal device, a base station, or a TRP.

In some embodiments, the communication unit may be a communication interface or a transceiver, or an input/output interface of a communication chip or a system on chip. The processing unit mentioned above may be one or more processors.

It should be understood that the communication device 300 according to the embodiments of the present disclosure may correspond to the first communication device in the method embodiments of the present disclosure, and the above-mentioned and other operations and/or functions of various units in the communication device 300 are respectively for implementing the corresponding process of the first communication device in the method 200 illustrated in FIG. 5, which will not be repeated here for the sake of brevity.

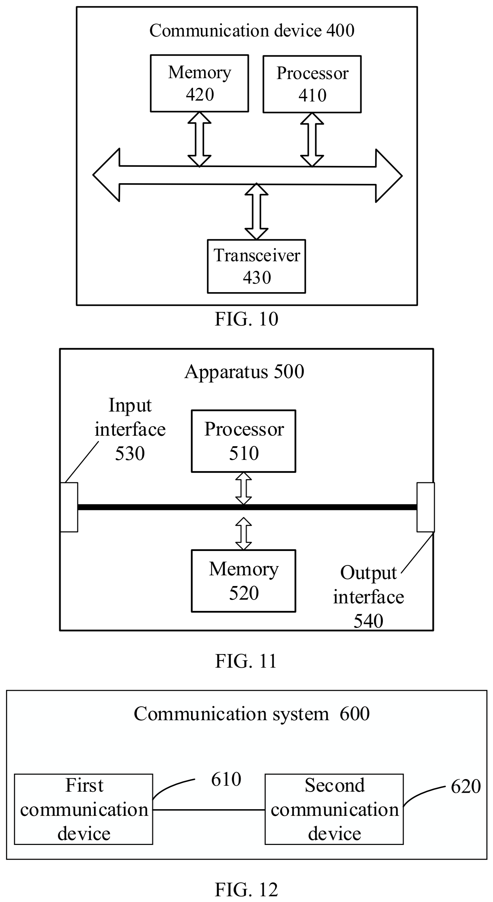

FIG. 10 is a schematic structural diagram of a communication device 400 provided in the embodiments of the present disclosure. The communication device 400 illustrated in FIG. 10 includes a processor 410. The processor 410 may call and run a computer program from a memory to implement the method in the embodiments of the present disclosure.

In some embodiments, as illustrated in FIG. 10, the communication device 400 may further include a memory 420. The processor 410 may call and run a computer program from the memory 420 to implement the method in the embodiments of the present disclosure.

The memory 420 may be a separate device independent from the processor 410, or may be integrated into the processor 410.

In some embodiments, as illustrated in FIG. 10, the communication device 400 may further include a transceiver 430. The processor 410 may control the transceiver 430 to communicate with other devices, and specifically, to transmit information or data to other devices, or receive information or data transmitted from other devices.

The transceiver 430 may include a transmitter and a receiver. The transceiver 430 may further include antenna(s), and the number of the antenna(s) may be one or more.

In some embodiments, the processor 410 may implement the functions of the processing unit in the communication device 300, which will not be described in detail here for the sake of brevity.

In some embodiments, the communication device 400 may specifically be the communication device of the embodiments of the present disclosure, and the communication device 400 may implement the corresponding processes implemented by the first communication device in various methods of the embodiments of the present disclosure, which will not be described in detail here for the sake of brevity.

FIG. 11 is a schematic structural diagram of an apparatus according to the embodiments of the present disclosure. An apparatus 500 illustrated in FIG. 11 includes a processor 510. The processor 510 may call and run a computer program from a memory to implement the method in the embodiments of the present disclosure.

In some embodiments, as illustrated in FIG. 11, the apparatus 500 may further include a memory 520. The processor 510 may call and run a computer program from the memory 520 to implement the method in the embodiments of the present disclosure.

The memory 520 may be a separate device independent of the processor 510, or may be integrated into the processor 510.

In some embodiments, the processor 510 may implement the functions of the processing unit in the communication device 300, which will not be described in detail here for the sake of brevity.

In some embodiments, the apparatus 500 may further include an input interface 530. The processor 510 may control the input interface 530 to communicate with other devices or chips, and specifically, may obtain information or data transmitted from other devices or chips. Optionally, the processor 510 may be positioned inside a chip or outside a chip.

In some embodiments, the apparatus 500 may further include an output interface 540. The processor 510 may control the output interface 540 to communicate with other devices or chips, and specifically, may output information or data to other devices or chips. Optionally, the processor 510 may be positioned inside a chip or outside a chip.

In some embodiments, the apparatus may be applied to the communication device in the embodiments of the present disclosure, and the apparatus may implement the corresponding processes implemented by the first communication device in the various methods in the embodiments of the present disclosure, which will not be described in detail here for the sake of brevity.

In some embodiments, the apparatus mentioned in the embodiments of the present disclosure may also be a chip. For example, the apparatus may be a system-level chip, a system chip, a chip system, a system-on-chip chip, or the like.

FIG. 12 is a schematic block diagram of a communication system 600 provided in the embodiments of the present disclosure. As illustrated in FIG. 12, the communication system 600 includes a first communication device 610 and a second communication device 620.

The first communication device 610 may be configured to implement the corresponding functions implemented by the first communication device in the above methods, which will not be described in detail for the sake of brevity.

It should be understood that the processor in the embodiments of the present disclosure may be an integrated circuit chip with signal processing capabilities. In the implementation process, various steps of the above method embodiments may be completed by an integrated logic circuit of hardware in the processor or an instruction in a software form. The above-mentioned processor may be a general-purpose processor, a digital signal processor (DSP), an application-specific integrated circuit (ASIC), a field programmable gate array (FPGA) or other programmable logic devices, a discrete gate or transistor logic device, or a discrete hardware component. The various methods, steps and logical block diagrams disclosed in the embodiments of the present disclosure may be implemented or executed. A general-purpose processor may be a microprocessor, or the processor may be any conventional processor or the like. The steps of the method disclosed in the embodiments of the present disclosure may be directly embodied as being executed by a hardware decoding processor, or may be implemented by a combination of hardware and software modules in the decoding processor. The software module may be located in mature storage medium in the art, such as a random access memory, a flash memory, a read-only memory, a programmable read-only memory, an electrically erasable programmable memory, and a register. The storage medium is located in the memory, and the processor reads the information in the memory and completes the steps of the above method in combination with its hardware.

It can be understood that the memory in the embodiments of the present disclosure may be a volatile memory or a non-volatile memory, or may include both volatile and non-volatile memories. Among them, the non-volatile memory may be a read-only memory (ROM), a programmable read-only memory (PROM), an erasable programmable read-only memory (Erasable PROM, EPROM), an electrically erasable programmable read-only memory (Electrically EPROM, EEPROM), or a flash memory. The volatile memory may be a random access memory (RAM), which acts as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM). It should be noted that memories of the systems and methods described herein are intended to include, without being limited to, these and any other suitable types of memories.

It should be understood that the above-mentioned memories are exemplary but not restrictive. For example, the memories in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) and a direct rambus random access memory (Direct Rambus RAM, DR RAM), etc. That is, the memories in the embodiments of the present disclosure are intended to include but are not limited to these and any other suitable types of memories.

The embodiments of the present disclosure further provide a computer-readable storage medium to store a computer program.

In some embodiments, the computer-readable storage medium may be applied to the communication device in the embodiments of the present disclosure, and the computer program enables a computer to perform the corresponding processes implemented by the first communication device in the various methods in the embodiments of the present disclosure, which will not be repeated here for the sake of brevity.

The embodiments of the present disclosure further provide a computer program product including computer program instructions.

In some embodiments, the computer program product may be applied to the communication device in the embodiments of the present disclosure, and the computer program instructions enable a computer to perform the corresponding processes implemented by the first communication device in the various methods in the embodiments of the present disclosure, which will not be repeated here for the sake of brevity.

The embodiments of the present disclosure further provide a computer program.

In some embodiments, the computer program may be applied to the communication device in the embodiments of the present disclosure. When being executed on a computer, the computer program enables the computer to perform the corresponding processes implemented by the first communication device in the various methods of the embodiments of the present disclosure, which will not be repeated here for the sake of brevity.

Those ordinary skilled in the art will appreciate that the units and algorithm steps of various examples described in conjunction with the embodiments disclosed herein may be implemented in electronic hardware, or in a combination of computer software and electronic hardware. Whether these functions are performed by way of hardware or software depends on a specific application and a design constraint of the technical solution. A skilled person may use different methods to implement the described functions for each specific application, but such implementation should not be considered to be beyond the scope of the present disclosure.

Those skilled in the art may clearly understand that, for the convenience and brevity of description, the specific working processes of the systems, devices/apparatuses and units described above may refer to the corresponding processes in the aforementioned method embodiments and will not be repeated here.

In several embodiments provided in the present disclosure, it should be understood that the disclosed systems, devices/apparatuses and methods may be implemented in other ways. For example, the device/apparatus embodiments described above are merely illustrative. For example, the division of the units is merely a logical function division. There may be other division methods in actual implementations. For example, multiple units or components may be combined or integrated into another system, or some features may be ignored or not executed. Another point is that the mutual coupling or direct coupling or communicative connection shown or discussed may be an indirect coupling or communicative connection via some interface, device or unit, which may be electrical, mechanical or in other forms.

The units described as separate components may or may not be physically separated, and the components shown as units may or may not be physical units, that is, they may be located in one place or distributed over multiple network units. Some or all of the units may be selected based on actual needs to achieve the purpose of the solution of the embodiments.

In addition, various functional unit in the various embodiments of the present disclosure may be integrated into one processing unit, or various units may exist physically separately, or two or more units may be integrated into one unit.

In a case where the described functions are implemented in the form of a software functional unit and sold or used as an independent product, the functions may be stored in a computer-readable storage medium. Based on such an understanding, the technical solution of the present disclosure may essentially be embodied in the form of a software product, or a part of the technical solutions that contributes to the prior art or a part of the technical solution may be embodied in the form of a software product. The computer software product is stored in a storage medium and includes some instructions for enabling a computer device (which may be a personal computer, a server, or a network device, etc.) to perform all or part of the steps of the method described in various embodiments of the present disclosure. The aforementioned storage medium include: a USB flash drive (U disk), a mobile hard disk, a read-only memory (ROM), a random access memory (RAM), a diskette or an optical disk and various mediums that may store program codes.

The above descriptions are merely specific implementations of the present disclosure, but the protection scope of the present disclosure is not limited thereto. Any skilled familiar with this technical field may easily think of changes or substitutions within the technical scope disclosed in the present disclosure, which should be all covered within the protection scope of the present disclosure. Therefore, the protection scope of the present disclosure shall be subjects to the protection scope of the claims.

**Claims**

1. A method for wireless communication, comprising:

   performing, by a first communication device, mobility management based on first information;
   wherein the first communication device is a zero power device or an ambient device, or the first communication device is a device with a wake up receiver; and the mobility management comprises at least one of: serving device selection, serving device reselection, or serving device handover; and
   the first information is at least one of: a reference signal measurement result of a serving device and/or a reference signal measurement result of a candidate device, a decoding result of a target message, a decoding result of a target channel, or power harvesting information of the first communication device.

2. The method according to claim 1, wherein
   in a case where the first information is the reference signal measurement result of the serving device and/or the reference signal measurement result of the candidate device, performing, by the first communication device, the mobility management based on the first information, comprises:
   performing, by the first communication device, the mobility management based on the reference signal measurement result of the serving device and/or the reference signal measurement result of the candidate device, and a serving device selection criterion or a serving device reselection criterion.

3. The method according to claim 2, wherein
   a measurement accuracy corresponding to the reference signal measurement result of the serving device and/or a measurement accuracy corresponding to the reference signal measurement result of the candidate device are determined based on an analogue-to-digital conversion (ADC) related capability of the first communication device, wherein different ADC related capabilities correspond to different measurement accuracies.

4. The method according to claim 2, wherein
   a measurement relaxation value corresponding to the reference signal measurement result of the serving device and/or a measurement relaxation value corresponding to the reference signal measurement result of the candidate device are determined based on an ADC related capability of the first communication device, wherein different ADC related capabilities correspond to different measurement relaxation values.

5. The method according to claim 2, further comprising:
   determining, by the first communication device, the reference signal measurement result of the serving device and/or the reference signal measurement result of the candidate device during a process of measuring a reference signal in at least one frequency by adjusting at least one of following parameters:
   increasing a number of samples associated with a measurement time length, reducing a discontinuous reception (DRX) cycle associated with the measurement time length, increasing a number of measurement times within the DRX cycle associated with the measurement time length, or reducing a scaling factor associated with the measurement time length.

6.  The method according to claim 5, wherein

    a respective measurement time length at each frequency of the at least one frequency is determined based on following formula:

$$T_{layer} = N * DRX \ cycle * M,$$

    wherein $T_{layer}$ represents the respective measurement time length at the each frequency, N represents the number of samples associated with the measurement time length, DRX cycle represents the DRX cycle associated with the measurement time length, and M represents the scaling factor associated with the measurement time length.

7.  The method according to claim 2, further comprising:
    measuring jointly, by the first communication device, a reference signal in at least one frequency through the wake up receiver of the first communication device and a main receiver of the first communication device, to determine the reference signal measurement result of the serving device and/or the reference signal measurement result of the candidate device.

8.  The method according to claim 7, wherein

    a respective measurement time length at each frequency of the at least one frequency is determined based on following formula:

$$T_{layer} = T_1 + T_2; \ or, \ T_{layer} = T_1 \ and \ T_1 \geq T_2; \ or, \ T_{layer} = T_2 \ and \ T_2 > T_1,$$

    wherein $T_1 = N_1 * DRX \ cycle_1 * M_1$, $T_2 = N_2 * DRX \ cycle_2 * M_2$,
    wherein $T_{layer}$ represents the respective measurement time length at the each frequency, $T_1$ represents a measurement time length of the wake up receiver, $T_2$ represents a measurement time length of the main receiver, $N_1$ represents a number of samples associated with the measurement time length of the wake up receiver, DRX cycle$_1$ represents a DRX cycle associated with the measurement time length of the wake up receiver, $M_1$ represents a scaling factor associated with the measurement time length of the wake up receiver, $N_2$ represents a number of samples associated with the measurement time length of the main receiver, DRX cycle$_2$ represents a DRX cycle associated with the measurement time length of the main receiver, and $M_2$ represents a scaling factor associated with the measurement time length of the main receiver.

9.  The method according to claim 8, wherein a value of $N_1$ and a value of $N_2$ are determined based on a network configuration, or the value of $N_1$ and the value of $N_2$ are determined based on an ADC related capability of the first communication device.

10. The method according to claim 9, wherein
    in a case where the value of $N_1$ and the value of $N_2$ are determined based on the network configuration, the network configuration is obtained via a broadcast message.

11. The method according to claim 1, wherein
    in a case where the first information is the reference signal measurement result of the serving device and/or the reference signal measurement result of the candidate device, performing, by the first communication device, the mobility management based on the first information, comprises:
    performing, by the first communication device, the mobility management based on a magnitude relationship between the reference signal measurement result of the serving device and the reference signal measurement result of the candidate device.

12. The method according to claim 11, wherein
    performing, by the first communication device, the mobility management based on the magnitude relationship between the reference signal measurement result of the serving device and the reference signal measurement result of the candidate device, comprises:

in a case where the reference signal measurement result of the candidate device is better than the reference signal measurement result of the serving device, reselecting, by the first communication device, the candidate device; or

in a case where reference signal measurement results of a plurality of candidate devices are all better than the reference signal measurement result of the serving device, reselecting, by the first communication device, a candidate device with a best reference signal measurement result among the plurality of candidate devices.

13. The method according to claim 11, wherein performing, by the first communication device, the mobility management based on the magnitude relationship between the reference signal measurement result of the serving device and the reference signal measurement result of the candidate device, comprises:

performing, by the first communication device, the mobility management based on the magnitude relationship between the reference signal measurement result of the serving device and the reference signal measurement result of the candidate device within a first evaluation window.

14. The method according to claim 13, wherein performing, by the first communication device, the mobility management based on the magnitude relationship between the reference signal measurement result of the serving device and the reference signal measurement result of the candidate device within the first evaluation window, comprises:

in a case where the reference signal measurement result of the candidate device is better than the reference signal measurement result of the serving device for $S_1$ consecutive times within the first evaluation window, reselecting, by the first communication device, the candidate device;

in a case where reference signal measurement results of a plurality of candidate devices are better than the reference signal measurement result of the serving device for Si consecutive times within the first evaluation window, reselecting, by the first communication device, a candidate device with a best reference signal measurement result among the plurality of candidate devices;

in a case where a number of times that the reference signal measurement result of the candidate device being better than the reference signal measurement result of the serving device within the first evaluation window is greater than $S_2$, reselecting, by the first communication device, the candidate device;

in a case where a number of times that the reference signal measurement results of the plurality of candidate devices being better than the reference signal measurement result of the serving device within the first evaluation window is greater than $S_2$, reselecting, by the first communication device, the candidate device with the best reference signal measurement result among the plurality of candidate devices;

in a case where a proportion of the number of times that the reference signal measurement result of the candidate device being better than the reference signal measurement result of the serving device within the first evaluation window is greater than $S_3$, reselecting, by the first communication device, the candidate device; or

in a case where a proportion of the number of times that the reference signal measurement results of the plurality of candidate devices being better than the reference signal measurement result of the serving device within the first evaluation window is greater than $S_3$, reselecting, by the first communication device, the candidate device with the best reference signal measurement result among the plurality of candidate devices,

wherein $S_1$ and $S_2$ are both positive integers, and $S_3$ is a positive number.

15. The method according to any one of claims 2 to 14, wherein the reference signal measurement result of the serving device and/or the reference signal measurement result of the candidate device comprises at least one of:

a reference signal received power (RSRP), a reference signal received quality (RSRQ), or a signal to interference and noise ratio (SINR).

16. The method according to claim 1, wherein in a case where the first information is the decoding result of the target message, performing, by the first communication device, the mobility management based on the first information, comprises:

determining, by the first communication device, whether to perform candidate device measurement for the mobility management based on a decoding result of a target message of the serving device; or

determining, by the first communication device, whether to reselect a candidate device based on the decoding result of the target message of the serving device and/or a decoding result of a target message of the candidate device.

17. The method according to claim 16, wherein determining, by the first communication device, whether to perform the candidate device measurement for the mobility management based on the decoding result of the target message of the serving device, comprises:

   determining, by the first communication device, not to perform the candidate device measurement for the mobility management, in a case where decoding of the target message of the serving device succeeds, or in a case where decoding of the target message of the serving device succeeds for $Q_1$ times within a second evaluation window, or in a case where decoding of the target message of the serving device succeeds for $Q_2$ consecutive times within the second evaluation window, or in a case where a decoding success rate of the target message of the serving device is greater than or equal to a first threshold, or in a case where the decoding success rate of the target message of the serving device within the second evaluation window is greater than or equal to the first threshold; and/or
   determining, by the first communication device, to perform the candidate device measurement for the mobility management, in a case where decoding of the target message of the serving device fails, or in a case where decoding of the target message of the serving device fails for $Q_3$ times within the second evaluation window, or in a case where decoding of the target message of the serving device fails for $Q_4$ consecutive times within the second evaluation window, or in a case where a decoding failure rate of the target message of the serving device is greater than or equal to a second threshold, or in a case where the decoding failure rate of the target message of the serving device within the second evaluation window is greater than or equal to the second threshold,
   wherein $Q_1$, $Q_2$, $Q_3$ and $Q_4$ are all positive integers.

18. The method according to claim 16, wherein determining, by the first communication device, whether to reselect the candidate device based on the decoding result of the target message of the serving device and/or the decoding result of the target message of the candidate device, comprises:

   determining, by the first communication device, to reselect the candidate device, in a case where a decoding success rate of the target message of the serving device is less than a decoding success rate of the target message of the candidate device, or in a case where the decoding success rate of the target message of the candidate device is greater than or equal to a third threshold, or in a case where the decoding success rate of the target message of the serving device is less than a fourth threshold, or in a case where the decoding success rate of the target message of the candidate device is greater than or equal to the third threshold and a priority of the candidate device is higher than a priority of the serving device, or in a case where decoding of the target message of the candidate device succeeds for $W_1$ times within a third evaluation window, or in a case where decoding of the target message of the candidate device succeeds for $W_2$ consecutive times within the third evaluation window, or in a case where the decoding success rate of the target message of the candidate device within the third evaluation window is greater than or equal to the third threshold, or in a case where a number of times that decoding of the target message of the candidate device succeeds within the third evaluation window is $W_3$ more than a number of times that decoding of the target message of the serving device succeeds, or in a case where the decoding success rate of the target message of the candidate device within the third evaluation window is X% greater than the decoding success rate of the target message of the serving device; or
   determining, by the first communication device, to reselect a candidate device with a highest decoding success rate of the target message among a plurality of candidate devices, in a case where the decoding success rate of the target message of the serving device is less than decoding success rates of the target messages of the plurality of candidate devices, or in a case where the decoding success rates of the target messages of the plurality of candidate devices are greater than or equal to the third threshold, or in a case where the decoding success rates of the target messages of the plurality of candidate devices are greater than or equal to the third threshold and priorities of the plurality of candidate devices are higher than the priority of the serving device, or in a case where decoding of the target messages of the plurality of candidate devices succeeds for $W_1$ times within the third evaluation window, or in a case where decoding of the target messages of the plurality of candidate devices succeeds for $W_2$ consecutive times within the third evaluation window, or in a case where the decoding success rates of the target messages of the plurality of candidate devices within the third evaluation window are greater than or equal to the third threshold, or in a case where a number of times that decoding of the target messages of the plurality of candidate devices succeeds within the third evaluation window is $W_3$ more than the number of times that decoding of the target message of the serving device succeeds, or in a case where the decoding success rates of the target messages of the plurality of candidate devices within the third evaluation window are X% greater than the decoding success rate of the target message of the serving device;
wherein $W_1$, $W_2$ and $W_3$ are all positive integers, and X is a positive number.

19. The method according to any one of claims 16 to 18, wherein
the target message is a system message or a broadcast message.

20. The method according to claim 19, wherein

in a case where the target message is the system message, the system message is a master information block (MIB) or a system information block (SIB); or
in a case where the target message is the broadcast message, the broadcast message is a paging message or a discovery message.

21. The method according to claim 1, wherein in a case where the first information is the decoding result of the target channel, performing, by the first communication device, the mobility management based on the first information, comprises:

determining, by the first communication device, whether to perform candidate device measurement for the mobility management based on a decoding result of a target channel of the serving device; or
determining, by the first communication device, whether to reselect the candidate device based on the decoding result of the target channel of the serving device and/or a decoding result of a target message of the candidate device.

22. The method according to claim 21, wherein determining, by the first communication device, whether to perform the candidate device measurement for the mobility management based on the decoding result of the target channel of the serving device, comprises:

determining, by the first communication device, not to perform the candidate device measurement for the mobility management, in a case where decoding of the target channel of the serving device succeeds, or in a case where decoding of the target channel of the serving device succeeds for $Q_1$ times within a second evaluation window, or in a case where decoding of the target channel of the serving device succeeds for $Q_2$ consecutive times within the second evaluation window, or in a case where a decoding success rate of the target channel of the serving device is greater than or equal to a first threshold, or in a case where the decoding success rate of the target channel of the serving device within the second evaluation window is greater than or equal to the first threshold; and/or
determining, by the first communication device, to perform the candidate device measurement for the mobility management, in a case where decoding of the target channel of the serving device fails, or in a case where the decoding of the target channel of the serving device fails for $Q_3$ times within the second evaluation window, or in a case where decoding of the target channel of the serving device fails for $Q_4$ consecutive times within the second evaluation window, or in a case where a decoding failure rate of the target channel of the serving device is greater than or equal to a second threshold, or in a case where the decoding failure rate of the target channel of the serving device within the second evaluation window is greater than or equal to the second threshold;
wherein $Q_1$, $Q_2$, $Q_3$ and $Q_4$ are all positive integers.

23. The method according to claim 21, wherein determining, by the first communication device, whether to reselect the candidate device based on the decoding result of the target channel of the serving device and/or the decoding result of the target channel of the candidate device, comprises:

determining, by the first communication device, to reselect the candidate device, in a case where a decoding success rate of the target channel of the serving device is less than a decoding success rate of the target channel of the candidate device, or in a case where the decoding success rate of the target channel of the candidate device is greater than or equal to a third threshold, or in a case where the decoding success rate of the target channel of the serving device is less than a fourth threshold, or in a case where the decoding success rate of the target channel of the candidate device is greater than or equal to the third threshold and a priority of the candidate device is higher than a priority of the serving device, or in a case where decoding of the target channel of the candidate device succeeds for $W_1$ times within a third evaluation window, or in a case where decoding of the target channel of the candidate device succeeds for $W_2$ consecutive times within the third evaluation window, or in a case where the decoding success rate of the target channel of the candidate device within the third evaluation window is greater than or equal to the third threshold, or in a case where a number of times that decoding of the target channel of the candidate device succeeds within the third evaluation window is $W_3$ more than a number of times that decoding of the target channel of the serving device succeeds, or in a case where the decoding success rate of the target channel of the candidate device within the third evaluation window is X% greater than the decoding success rate of the target channel of the serving device; or

determining, by the first communication device, to reselect a candidate device with a highest decoding success rate of the target channel among a plurality of candidate devices, in a case where the decoding success rate of the target channel of the serving device is less than decoding success rates of the target channels of the plurality of candidate devices, or in a case where the decoding success rates of the target channels of the plurality of candidate devices are greater than or equal to the third threshold, or in a case where the decoding success rates of the target channels of the plurality of candidate devices are greater than or equal to the third threshold and priorities of the plurality of candidate devices are higher than the priority of the serving device, or in a case where decoding of the target channels of the plurality of candidate devices succeeds for $W_1$ times within the third evaluation window, or in a case where decoding of the target channels of the plurality of candidate devices succeeds for $W_2$ consecutive times within the third evaluation window, or in a case where the decoding success rates of the target channels of the plurality of candidate devices within the third evaluation window are greater than or equal to the third threshold, or in a case where a number of times that decoding of the target channels of the plurality of candidate devices succeeds within the third evaluation window is $W_3$ more than the number of times that decoding of the target channel of the serving device succeeds, or in a case where the decoding success rates of the target channels of the plurality of candidate devices within the third evaluation window are X% greater than the decoding success rate of the target channel of the serving device;

wherein $W_1$, $W_2$ and $W_3$ are all positive integers, and X is a positive number.

24. The method according to any one of claims 21 to 23, wherein
the target channel is one of: a broadcast channel, a control channel, and a data channel.

25. The method according to claim 1, wherein
in a case where the first communication device is the zero power device or the ambient device, and the first information is the power harvesting information of the first communication device, performing, by the first communication device, the mobility management based on the first information, comprises:

determining, by the first communication device, whether to perform candidate device measurement for the mobility management based on the power harvesting information of the first communication device in a case where the serving device provides a power supply signal; or

determining, by the first communication device, whether to reselect the candidate device based on power harvesting information of the first communication device in a case where the serving device and the candidate device respectively provide a power supply signal.

26. The method according to claim 25, wherein determining, by the first communication device, whether to perform the candidate device measurement for the mobility management based on the power harvesting information of the first communication device in a case where the serving device provides the power supply signal, comprises:

determining, by the first communication device, not to perform the candidate device measurement for the mobility management, if power harvesting efficiency of the first communication device in a case where the serving device provides the power supply signal is greater than or equal to a fourth threshold, or if a time length required for the first communication device to complete a charge in a case where the serving device provides the power supply signal is less than a fifth threshold, or if a time length required for the first communication device to charge Y% in a case where the serving device provides the power supply signal is less than a sixth threshold, or if a time length required for the first communication device to charge from $Y_1$% to $Y_2$% in a case where the serving device provides the power supply signal is less than a seventh threshold, or if a charging amount of the first communication device within a target time length in a case where the serving device provides the power supply signal is greater than an eighth threshold; and/or

determining, by the first communication device, to perform the candidate device measurement for the mobility management, if the power harvesting efficiency of the first communication device in a case where the serving device provides the power supply signal is less than the fourth threshold, or if the time length required for the first communication device to complete the charge in a case where the serving device provides the power supply signal is greater than or equal to the fifth threshold, or if the time length required for the first communication device to charge Y% in a case where the serving device provides the power supply signal is greater than or equal to the sixth threshold, or if the time length required for the first communication device to charge from $Y_1$% to $Y_{2\%}$ in a case where the serving device provides the power supply signal is greater than or equal to the seventh threshold, or if the charging amount of the first communication device within the target time length in a case where the serving device provides the power supply signal is less than or equal to the eighth threshold;

wherein $Y_1$, $Y_2$ and Y are all positive numbers.

27. The method according to claim 25, wherein determining, by the first communication device, whether to reselect the candidate device based on the power harvesting information of the first communication device in a case where the serving device and the candidate device respectively provide the power supply signal, comprises:

determining, by the first communication device, to reselect the candidate device, if power harvesting efficiency of the first communication device in a case where the serving device provides the power supply signal is less than power harvesting efficiency of the first communication device in a case where the candidate device provides the power supply signal, or if a time length required for the first communication device to complete a charge in a case where the serving device provides the power supply signal exceeds a time length required for the first communication device to complete the charge in a case where the candidate device provides the power supply signal, or if the time length required for the first communication device to complete the charge in a case where the serving device provides the power supply signal exceeds T seconds or T% of the time length required for the first communication device to complete the charge in a case where the candidate device provides the power supply signal, or if a charging amount of the first communication device within a target time length in a case where the candidate device provides the power supply signal is K or K% more than a charging amount of the first communication device within the target time length in a case where the serving device provides with the power supply signal, or if a time length required for the first communication device to charge Y% in a case where the serving device provides the power supply signal exceeds a time length required for the first communication device to charge Y% in a case where the candidate device provides the power supply signal, or if a time length required for the first communication device to charge from $Y_1$% to $Y_2$% in a case where the serving device provides the power supply signal exceeds a time length required for the first communication device to charge from $Y_1$% to $Y_2$% in a case where the candidate device provides the power supply signal; or

determining, by the first communication device, to reselect a candidate device with highest power harvesting efficiency among a plurality of candidate devices, if the power harvesting efficiency of the first communication device in a case where the serving device provides the power supply signal is less than power harvesting efficiency of the first communication device in a case where the plurality of candidate devices respectively provide a power supply signal, or if the time length required for the first communication device to complete the charge in a case where the serving device provides the power supply signal exceeds a time length required for the first communication device to complete the charge in a case where the plurality of candidate devices respectively provide the power supply signal, or if the time length required for the first communication device to complete the charge in a case where the serving device provides the power supply signal exceeds T seconds or T% of the time length required for the first communication device to complete the charge in a case where the plurality of candidate devices respectively provide the power supply signal, or if a charging amount of the first communication device within the target time length in a case where the plurality of candidate devices respectively provide the power supply signal is K or K% more than the charging amount of the first communication device within the target time length in a case where the serving device provides the power supply signal, or if the time length required for the first communication device to charge Y% in a case where the serving device provides the power supply signal exceeds a time length required for the first communication device to charge Y% in a case where the plurality of candidate devices respectively provide the power supply signal, or if the time length required for the first communication device to charge from $Y_1$% to $Y_2$% in a case where the serving device provides the power supply signal exceeds a time length required for the first communication device to charge from $Y_1$% to $Y_2$% in a case where the plurality of candidate devices respectively provide the power supply signal,

wherein T, K, $Y_1$, $Y_2$ and Y are all positive numbers.

28. The method according to any one of claims 25 to 27, wherein

power of the power supply signal provided by the serving device is same as power of the power supply signal provided by the candidate device; and/or

a duty cycle of the power supply signal provided by the serving device is same as a duty cycle of the power supply signal provided by the candidate device.

29. The method according to any one of claims 1 to 28, wherein

the serving device is at least one of: an access point (AP), a station (STA), a terminal device, a base station, or a transmission reception point (TRP); and/or

the candidate device is at least one of: an AP, a STA, a terminal device, a base station, or a TRP.

30. A communication device, wherein the communication device is a first communication device, and the communication device comprises:

a processing unit, configured to perform mobility management based on first information;

wherein the first communication device is a zero power device or an ambient device, or the first communication device is a device with a wake up receiver; the mobility management comprises at least one of: serving device selection, serving device reselection, or serving device handover; and

the first information is at least one of: a reference signal measurement result of a serving device and/or a reference signal measurement result of a candidate device, a decoding result of a target message, a decoding result of a target channel, or power harvesting information of the first communication device.

31. A communication device, comprising: a processor and a memory, wherein the memory is configured to store a computer program, and the processor is configured to call and run the computer program stored in the memory, to enable the communication device to perform the method according to any one of claims 1 to 29.

32. A chip, comprising: a processor, configured to call and run a computer program from a memory, to enable a device equipped with the chip to perform the method according to any one of claims 1 to 29.

33. A computer-readable storage medium, configured to store a computer program, wherein when the computer program is executed, the method according to any one of claims 1 to 29 is implemented.

34. A computer program product, comprising computer program instructions, wherein when the computer program instructions are executed, the method according to any one of claims 1 to 29 is implemented.

**100**

FIG. 1

FIG. 2

FIG. 3

FIG. 4

**200**

<div style="border:1px solid">

A first communication device performs mobility management based on first information,

where the first communication device is a zero power device or an ambient power-enabled device, or the first communication device is a device with a wake up receiver; the mobility management includes at least one of: service device selection, service device reselection, or service device handover;

where the first information is at least one of: a reference signal measurement result of a service device and/or a reference signal measurement result of a candidate device, a decoding result of a target message, a decoding result of a target channel, or power harvesting information of the first communication device.

</div>

S210

FIG. 5

FIG. 6

FIG. 7

FIG. 8

Communication device 300

Processing unit 310

FIG. 9

Communication device 400

Memory
420

Processor
410

Transceiver
430

FIG. 10

Apparatus 500

Input
interface
530

Processor
510

Memory
520

Output
interface
540

FIG. 11

Communication system 600

First
communication
device

610

Second
communication
device

620

FIG. 12

## INTERNATIONAL SEARCH REPORT

| International application No. |
| --- |
| **PCT/CN2023/073379** |

**A. CLASSIFICATION OF SUBJECT MATTER**

H04W36/30(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, VEN, CNTXT, ENTXTC, ENTXT, bing: 唤醒接收机, 零功耗, 环境能, 射频标签, 切换, 重选, 信号强度, 选择, 移动性管理, 重选, WUR, Wake-Up Radio, zero power, zp lot, environment energy, RFID, tag, select, reselect+, handover, handoff, RSRP, RSRQ

**C. DOCUMENTS CONSIDERED TO BE RELEVANT**

| Category* | Citation of document, with indication, where appropriate, of the relevant passages | Relevant to claim No. |
| --- | --- | --- |
| X | OPPO. "零功耗通信 (Zero-power Communication)"<br>*https://www.oppo.com/en/newsroom/press/oppo-releases-zero-power-communication-whitepaper/*, 20 January 2022 (2022-01-20),<br>sections 4.2, 5.3.3, and 6.3 | 1-2, 11-13, 15-16, 19-21, 24-25, 29-34 |
| A | CN 107786255 A (HUAWEI TECHNOLOGIES CO., LTD.) 09 March 2018 (2018-03-09)<br>entire document | 1-34 |
| A | CN 115398562 A (GUANGDONG OPPO MOBILE COMMUNICATIONS CO., LTD.) 25 November 2022 (2022-11-25)<br>entire document | 1-34 |
| A | US 2011084815 A1 (AALBORG UNIVERSITET) 14 April 2011 (2011-04-14)<br>entire document | 1-34 |
| A | WO 2021174427 A1 (GUANGDONG OPPO MOBILE TELECOMMUNICATIONS CORP., LTD.) 10 September 2021 (2021-09-10)<br>entire document | 1-34 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 September 2023** | **20 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/073379** |

**C. DOCUMENTS CONSIDERED TO BE RELEVANT**

| Category* | Citation of document, with indication, where appropriate, of the relevant passages | Relevant to claim No. |
|---|---|---|
| A | CN 108464039 A (SAMSUNG ELECTRONICS CO., LTD.) 28 August 2018 (2018-08-28) entire document | 1-34 |
| A | CN 114143844 A (UNISOC (CHONGQING) TECHNOLOGY CO., LTD.) 04 March 2022 (2022-03-04) entire document | 1-34 |
| A | CN 114760666 A (QUECTEL WIRELESS SOLUTIONS CO., LTD.) 15 July 2022 (2022-07-15) entire document | 1-34 |

Form PCT/ISA/210 (second sheet) (July 2022)

**INTERNATIONAL SEARCH REPORT**
Information on patent family members

International application No.

**PCT/CN2023/073379**

| Patent document cited in search report | | | Publication date (day/month/year) | Patent family member(s) | | | Publication date (day/month/year) |
|---|---|---|---|---|---|---|---|
| CN | 107786255 | A | 09 March 2018 | WO | 2018041001 | A1 | 08 March 2018 |
| CN | 115398562 | A | 25 November 2022 | WO | 2022198387 | A1 | 29 September 2022 |
| US | 2011084815 | A1 | 14 April 2011 | WO | 2009118012 | A1 | 01 October 2009 |
| WO | 2021174427 | A1 | 10 September 2021 | CN | 114830712 | A | 29 July 2022 |
| CN | 108464039 | A | 28 August 2018 | KR | 20170083975 | A | 19 July 2017 |
| | | | | WO | 2017123009 | A1 | 20 July 2017 |
| | | | | US | 2019045416 | A1 | 07 February 2019 |
| | | | | US | 10728824 | B2 | 28 July 2020 |
| | | | | EP | 3389309 | A1 | 17 October 2018 |
| | | | | EP | 3389309 | A4 | 31 October 2018 |
| | | | | CN | 108464039 | B | 19 February 2021 |
| CN | 114143844 | A | 04 March 2022 | | None | | |
| CN | 114760666 | A | 15 July 2022 | | None | | |

Form PCT/ISA/210 (patent family annex) (July 2022)